# EUROPEAN PATENT SPECIFICATION

(11) **EP 3 588 173 B1**
(45) Date of publication and mention of the grant of the patent: **10.04.2024**
(21) Application number: 18756779.7
(22) Date of filing: 20.02.2018
(51) Int. Cl.: G02C 7/08, G02C 7/10, G02C 11/00, G02C 7/06, G02B 27/01, G02B 3/14, G06F 3/01, G02F 1/133, G06F 3/02, G06F 3/0354

(54) **EYEWEAR**
BRILLE
LUNETTES

(30) Priority: 22.02.2017 JP 2017031280
(43) Date of publication of application: 01.01.2020
(73) Proprietor: Mitsui Chemicals, Inc., Tokyo 104-0028 (JP)
(72) Inventor: MURAMATSU, Akihiro, Nagoya-shi Aichi 457-8522 (JP); OKADA, Yoshinobu, Nagoya-shi Aichi 457-8522 (JP); HIKOSAKA, Eiichiro, Nagoya-shi Aichi 457-8522 (JP); AONO, Akifumi, Nagoya-shi Aichi 457-8522 (JP); KAN, Ryuki, Nagoya-shi Aichi 457-8522 (JP); OHTO, Takafumi, Nagoya-shi Aichi 457-8522 (JP); TANAKA, Sho, Tokyo, 105-7122 (JP)
(74) Representative: Epping - Hermann - Fischer
(86) International application number: PCT/JP2018/005820
(87) International publication number: WO 2018/155392

(56) References cited:
- WO-A1-01/01848
- WO-A1-2013/008863
- WO-A1-2014/045035
- JP-A- 2009 086 255
- JP-A- 2012 514 773
- JP-A- 2015 158 753
- JP-A- 2016 161 807
- JP-A- 2016 173 845
- JP-A- 2016 507 802
- JP-A- 2017 504 277
- US-A1- 2015 022 773
- US-B1- 8 203 502

## Description

### Technical Field

The present invention relates to an eyewear.

### Background Art

In recent years, an electronic device that is wearable by a user (wearable device) has been developed.

For example, PTL 1 discloses an eyewear (glasses) that can control an electrical signal to a liquid crystal lens in accordance with the inclination angle of a main body of the glasses to change the focal length thereof automatically.

PTL 2 discloses an eyewear that causes the focal length of a lens and the like to change by detecting the visual range, the gaze, or the inclination of the head of a user.

The eyewear can have a plurality of various functions other than the functions described in PTL 1 and PTL 2. A wearable device having a plurality of functions is desired to receive a plurality of input operations from the user and the like for the selection, the operation, and the like of the functions.

For example, PTL 3 discloses an eyewear including a plurality of sensors capable of outputting functions different from each other.

PTL 4 discloses eyewear with a frame, an input section, an optical module and a control section. The input section is disposed in the frame and is configured to receive a first instruction operation and a second instruction operation that are different from each other.

The optical module is held by the frame and is a module whose optical property changes in accordance with electric control. The control section changes the optical property of the optical module when the input section receives the instruction operation.

### Citation List

### Patent Literature

PTL 1
   Japanese Patent Application Laid-Open No. S62-009315
PTL 2
   U.S. Patent No. 6517203
PTL 3
   Japanese Unexamined Patent Application Publication (Translation of PCT Application) No. 2016-507802
PTL 4
   US 2015/022773 A1

Other relevant documents of the prior art are any of WO01/01848A1, WO2014/045035A1 or JP2015 158753 A.

### Summary of Invention

### Technical Problem

The eyewear disclosed in PTL 3 can output the plurality of functions in accordance with an instruction operation by the user. However, in the eyewear disclosed in PTL 3, as the functions included in the eyewear increase or become complicated, sensors corresponding thereto need to be increased. As described above, an eyewear including a larger number of sensors may cause the operation by the user to be complicated, cause the operation to be difficult, and cause erroneous operation to be more likely to occur.

In view of the abovementioned problems, an object of the present invention is to provide an eyewear capable of executing a plurality of functions with a simpler operation. Solution to Problem

The present invention relates to an eyewear including a control section capable of selectively executing each function included in each tier of a function system having a hierarchical structure in accordance with a plurality of different input operations to an input section according to claim 1.

### Advantageous Effects of Invention

According to the present invention, an eyewear capable of executing a plurality of functions with a simpler operation is provided.

### Brief Description of Drawings

FIG. 1 is a perspective view illustrating an eyewear according to Embodiment 1 of the present invention;
FIG. 2 is another perspective view illustrating the eyewear according to Embodiment 1 of the present invention;
FIG. 3 is a block diagram illustrating the functional configuration of the eyewear according to Embodiment 1 of the present invention;
FIG. 4 is a schematic cross-sectional view of part A-A' of an electrically controlled lens included in the eyewear according to Embodiment 1 of the present invention;
FIG. 5 is a flowchart illustrating an operation example of the eyewear according to Embodiment 1 of the present invention;
FIG. 6 is a flowchart illustrating another operation example of the eyewear according to Embodiment 1 of the present invention;
FIG. 7 is a schematic cross-sectional view of an input section included in an eyewear that may be used in a modified usage example of Embodiment 1 of the present invention;
FIG. 8 is a flowchart illustrating an operation example of an eyewear according to Embodiment 2 of the present invention;
FIG. 9 is a perspective view illustrating an eyewear in which the position of the input section is different;
FIG. 10 is a perspective view illustrating another eyewear in which the position of the input section is different;
FIG. 11 is a perspective view illustrating yet another eyewear in which the position of the input section is different; and
FIG. 12 is a block diagram illustrating an exemplary functional configuration of an eyewear in another embodiment of the present invention.

### Description of Embodiments

An eyewear of the present invention is described below with use of a plurality of embodiments.

The eyewear of the present invention includes, for example, so-called glasses (including electronic glasses and sunglasses) and goggles including an assistance mechanism for improving the eyesight of a user such as an eyesight correction lens, and various devices (for example, a glasses-type wearable terminal, a head mounted display, and the like) including a mechanism that proposes information to the field of vision or the eyes of the user. In this embodiment below, electronic glasses for both eyes including a pair of lenses are described as an example, but the eyewear according to the present invention is not limited to this aspect. The eyewear only needs to have a configuration that holds an assistance mechanism for improving the eyesight or the field of vision for the eyes and a mechanism for proposing information by being worn. The eyewear is not limited to a glasses-type eyewear worn on both ears, and may be an apparatus worn on the head or one of the ears. The eyewear does not necessarily need to be eyewear for both eyes and may also be eyewear that works on only one eye.

### [Embodiment 1]

### (Eyewear)

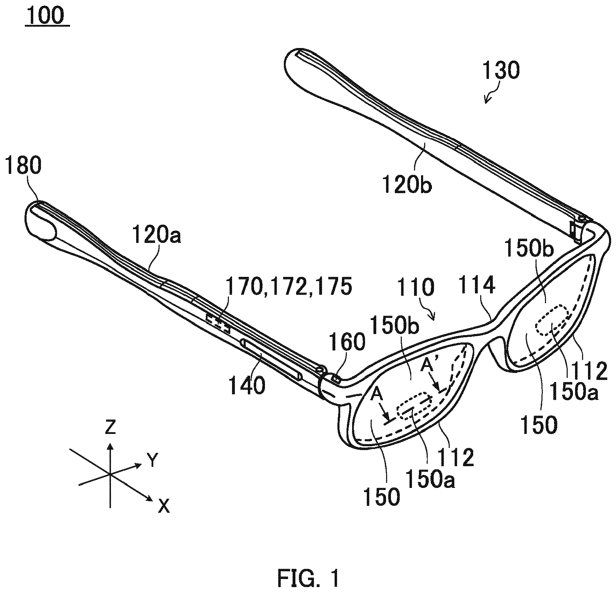

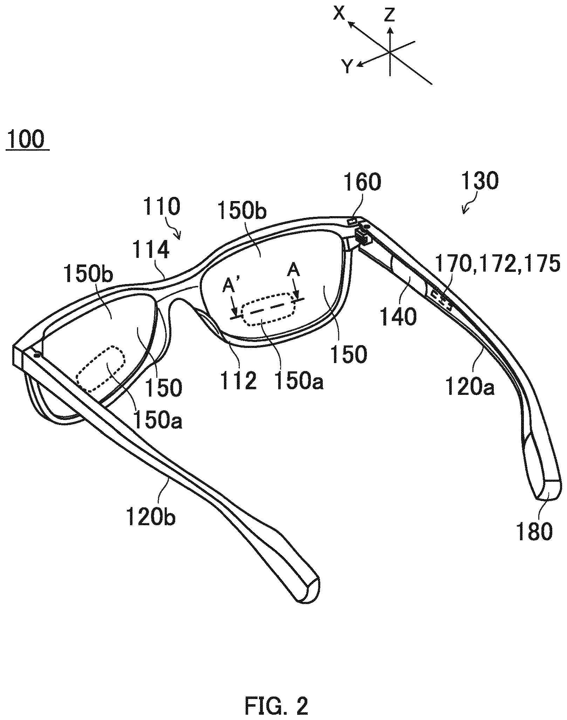

FIG. 1 and FIG. 2 are perspective views illustrating eyewear 100 according to Embodiment 1 of the present invention.

As illustrated in FIG. 1 and FIG. 2, eyewear 100 includes frame 130 including front 110 and pair of temples 120a and 120b, input section 140, pair of electrically controlled lenses 150 that is an optical module of which optical property changes in accordance with electric control, sensing section 160, an computing apparatus such as CPU unit 175 including a random access memory (RAM) and a central processing unit (CPU) also functioning as control section 170, a read only memory (ROM) also functioning as storage section 172, and the like, and power source 180. The CPU reads out a program for executing the function of eyewear 100 from the ROM, expands the program to the RAM, and executes the expanded program, thereby controlling the operation of each function section of eyewear 100.

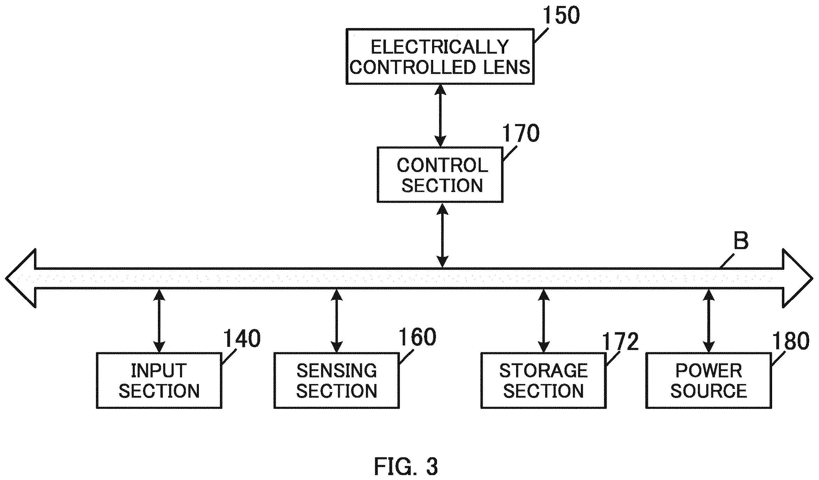

As illustrated in FIG. 3 that is a block diagram illustrating the functional configuration of eyewear 100, the function sections included in eyewear 100 are connected to each other by bus B.

Note that, in the description below, the part in which pair of electrically controlled lenses 150 is disposed is the front surface (front side) of eyewear 100. In the description below, the X-axis direction in the accompanying drawings is the longitudinal direction (the direction indicated by the arrow is the front side), the Y-axis direction in the accompanying drawings is the lateral direction (the direction indicated by the arrow is the left side), and the Z-axis direction in the accompanying drawings is the vertical direction (the direction indicated by the arrow is the upper side).

Front 110 holds pair of electrically controlled lenses 150. Front 110 includes pair of rims 112 respectively supporting pair of electrically controlled lenses 150 described above, and bridge 114 connecting pair of rims 112 described above to each other. Rims 112 have shapes corresponding to the shapes of electrically controlled lenses 150. Although not particularly shown, wiring for electrically connecting electrically controlled lenses 150 and CPU unit 175 (control section 170) to each other is disposed in front 110.

The material of front 110 is not particularly limited, and well-known materials used as materials of the front of the glasses can be used. Examples of the material of front 110 include polyamide, acetate, carbon, celluloid, polyetherimide, and polyurethane.

Pair of temples 120a and 120b are rod-like members connected to front 110 so as to be substantially symmetrical, and are connected to front 110 at front end portions thereof. Input section 140, CPU unit 175 (control section 170), sensing section 160, and power source 180 are disposed in one of pair of temples 120a and 120b (temple 120a on the right side in FIG. 1 and FIG. 2). Although not particularly shown, wiring for electrically connecting input section 140, CPU unit 175 (control section 170 and storage section 172), sensing section 160, and power source 180 is disposed in front 110.

The material of temples 120a and 120b is not particularly limited, and can be well-known materials used as the material of the temple of the glasses. Examples of the material of temples 120a and 120b include polyamide, acetate, carbon, celluloid, polyetherimide, and polyurethane.

Input section 140 receives input operation from the user wearing the eyewear and the like. Input section 140 is a plurality of electrostatic capacitive touch sensors arranged in a row from the front side toward the rear side in a region on the outer side and the front side of temple 120a, and identifies and receives a first instruction operation that is an input operation of moving (swiping) a finger or thumb and the like from the front side to the rear side along the plurality of touch sensors and a second instruction operation that is an input operation of moving (swiping) a finger or thumb and the like from the rear side to the front side along the plurality of touch sensors that is a direction substantially opposite from the first direction.

Input section 140 may be able to identify and receive the operation amount (movement amount) of the input operation from the number of touch sensors of which electrostatic capacity has changed by the swipe operation.

Note that input section 140 may be a sensor other than the touch sensor, and the number of sensor devices does not necessarily need to be in plurality and may be single. For example, a touch pad that can detect the position in contact with a part of the human body may be disposed as input section 140, and the movement locus of the finger or thumb may be detected. In this case, a single device including a touch pad only needs to be disposed in temple 120a.

Pair of electrically controlled lenses 150 are lenses that are held by front 110 of the frame and include electroactive portions of which optical property changes in accordance with the application of voltage. Each of the electrically controlled lenses may be a spherical lens or may be an aspherical lens. Each of the electrically controlled lenses includes first region 150a capable of changing the focal length (power) and the visible light transmittance thereof in accordance with the application of voltage, and second region 150b capable of changing the visible light transmittance thereof in accordance with the application of voltage.

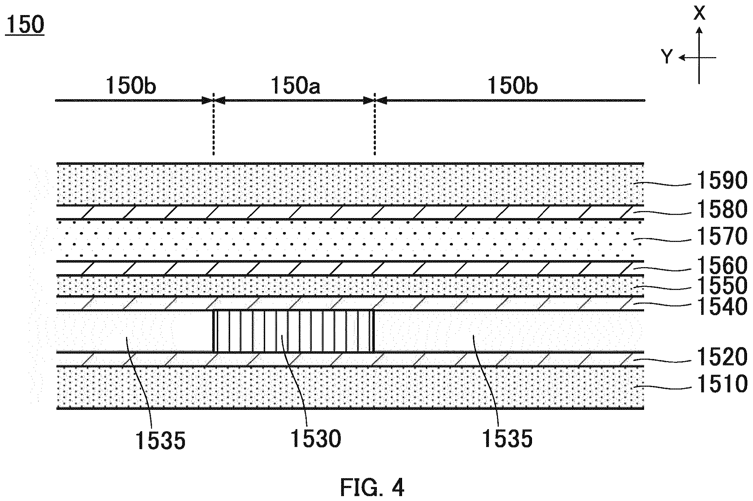

As illustrated in FIG. 4 that is a schematic cross-sectional view of part A-A' of an electrically controlled lens 150, first region 150a is formed by laminating first transparent substrate 1510, first transparent electrode 1520, refractive index changeable layer 1530 serving as the electroactive portion, second transparent electrode 1540, second transparent substrate 1550, third transparent electrode 1560, transmittance changeable layer 1570 serving as the electroactive portion, fourth transparent electrode 1580, and third transparent substrate 1590 from the rear side (user side) in the order presented.

Note that, although not particularly shown, first transparent substrate 1510 and first transparent electrode 1520, or second transparent substrate 1550 and second transparent electrode 1540 may have a Fresnel lens shape in first region 150a.

As illustrated in FIG. 4, second region 150b is formed by laminating first transparent substrate 1510, first transparent electrode 1520, adhesive layer 1535, second transparent electrode 1540, second transparent substrate 1550, third transparent electrode 1560, transmittance changeable layer 1570 serving as the electroactive portion, fourth transparent electrode 1580, and third transparent substrate 1590 from the rear side (user side) in the order presented.

Note that second transparent electrode 1540 and third transparent electrode 1560 may be a common electrode. At this time, the disposal of second transparent substrate 1550 may be omitted.

First transparent substrate 1510, second transparent substrate 1550, and third transparent substrate 1590 are transparent members curved in a convex shape toward the front side of eyewear 100.

The materials of first transparent substrate 1510, second transparent substrate 1550, and third transparent substrate 1590 are not particularly limited as long as the materials transmit visible light, and may be well-known materials that may be used as the material of the lens. Examples of the materials of first transparent substrate 1510, second transparent substrate 1550, and third transparent substrate 1590 include glass and resin. Examples of the resin include polymethyl methacrylate, polycarbonate, poly(diethylene glycol bis(allyl carbonate)), and polystyrene. The materials of first transparent substrate 1510, second transparent substrate 1550, and third transparent substrate 1590 may be the same or may be different from each other.

First transparent electrode 1520 and second transparent electrode 1540 form a pair of transparent electrodes that transmits light, and third transparent electrode 1560 and fourth transparent electrode 1580 form a pair of transparent electrodes that transmits light.

First transparent electrode 1520 and second transparent electrode 1540 are disposed in a range (first region 150a) in which voltage may be applied to at least refractive index changeable layer 1530, and third transparent electrode 1560 and fourth transparent electrode 1580 are disposed in a range (first region 150a and second region 150b) in which voltage may be applied to at least transmittance changeable layer 1570.

The materials of first transparent electrode 1520, second transparent electrode 1540, third transparent electrode 1560, and fourth transparent electrode 1580 are not particularly limited as long as the materials transmit visible light and have conductivity. Examples of the materials of first transparent electrode 1520, second transparent electrode 1540, third transparent electrode 1560, and fourth transparent electrode 1580 include indium tin oxide (ITO) and zinc oxide (ZnO). The materials of first transparent electrode 1520, second transparent electrode 1540, third transparent electrode 1560, and fourth transparent electrode 1580 may be the same or may be different from each other.

Refractive index changeable layer 1530 is a layer that changes the refractive index of the visible light in accordance with the application of voltage. Examples of the material of refractive index changeable layer 1530 include a cholesteric liquid crystal, a nematic liquid crystal, and the like. When voltage is applied to refractive index changeable layer 1530 by first transparent electrode 1520 and second transparent electrode 1540, the orientation of liquid crystal molecules is changed, and hence the refractive index of refractive index changeable layer 1530 reversibly changes. Therefore, refractive index changeable layer 1530 changes the focal length (power) of first region 150a in accordance with the application of voltage.

Transmittance changeable layer 1570 is a layer that changes the visible light transmittance in accordance with the application of voltage. Examples of the material of transmittance changeable layer 1570 include an electrochromic device, a guest-host liquid crystal, and the like. When voltage is applied to transmittance changeable layer 1570 by third transparent electrode 1560 and fourth transparent electrode 1580, the transmittance of transmittance changeable layer 1570 reversibly changes in accordance with an oxidation-reduction reaction caused by the supplied electrons, the change in orientation of the liquid crystal molecules, and the like. Therefore, transmittance changeable layer 1570 changes the visible light transmittance of first region 150a and second region 150b in accordance with the application of voltage.

Adhesive layer 1535 is disposed between first transparent substrate 1510 and second transparent substrate 1550 in second region 150b and causes first transparent substrate 1510 and second transparent substrate 1550 to adhere to each other. When first transparent electrode 1520 and second transparent electrode 1540 are also disposed in second region 150b, adhesive layer 1535 is disposed between first transparent electrode 1520 and second transparent electrode 1540. Adhesive layer 1535 also has a function of encapsulating the material forming refractive index changeable layer 1530. The material of adhesive layer 1535 is not particularly limited as long as the material is a product obtained by curing an adhesive that transmits visible light.

Sensing section 160 includes an inclination sensor that senses a vertically downward inclination angle of eyewear 100 with respect to the horizontal axis (hereinafter simply referred to as an "inclination angle"), an illuminance sensor that senses the illuminance of light toward eyewear 100, a timer that measures the amount of time, or the like.

Sensing section 160 outputs the inclination angle sensed by the inclination sensor and the illuminance sensed by the illuminance sensor to control section 170.

Control section 170 determines whether the input operation received by input section 140 is the first instruction operation or the second instruction operation, and changes the optical property of electrically controlled lenses 150 by executing the function in each tier corresponding to the instruction operation included in the function system having a hierarchical structure when the input operation is the first instruction operation or the second instruction operation.

With the combination of the upper-tier function and the lower-tier function to be executed described above, the setting of eyewear 100 may be changed to any of nine modes shown in Table 1. For each mode, when the inclination angle or the illuminance sensed by sensing section 160 satisfies a condition (hereinafter also simply referred to as a "change condition") for changing the optical property (the refractive index or the transmittance) of electrically controlled lenses 150, control section 170 defines a pattern (hereinafter also simply referred to as a "change pattern") for changing the optical property (the refractive index or the transmittance) of electrically controlled lenses 150 to a predetermined state. The setting of each mode is realized when control section 170 selectively executes any of the upper-tier functions forming the function system having a hierarchical structure described above and control section 170 selectively executes any of the lower-tier functions.

**[Table 1]**

| Mode name | Upper-tier function | Lower-tier function |
|---|---|---|
| Mode 1: Eyesight correction/parallel reading mode | Eyesight correction function | Parallel reading function |
| Mode 2: Eyesight correction/intermediate angle reading mode | | Intermediate angle reading function |
| Mode 3: Eyesight correction/depression angle reading mode | | Depression angle reading function |
| Mode 4: Weak dimming mode | Dimming function | Weak dimming function |
| Mode 5: Medium dimming mode | | Medium dimming function |
| Mode 6: Strong dimming mode | | Strong dimming function |
| Mode 7: Hybrid/weak dimming mode | Hybrid function | Hybrid/weak dimming function |
| Mode 8: Hybrid/medium dimming mode | | Hybrid/medium dimming function |
| Mode 9: Hybrid/strong dimming mode | | Hybrid/strong dimming function |

Control section 170 is electrically connected to first transparent electrode 1520, second transparent electrode 1540, third transparent electrode 1560, and fourth transparent electrode 1580 of electrically controlled lenses 150, input section 140, and sensing section 160. In each of the abovementioned modes, when the inclination angle or the illuminance sensed by sensing section 160 satisfies the abovementioned change condition, control section 170 changes the optical property (the refractive index or the transmittance) of electrically controlled lenses 150 in accordance with the change pattern defined by the set mode by applying voltage to any of first transparent electrode 1520, second transparent electrode 1540, third transparent electrode 1560, and fourth transparent electrode 1580.

Mode 1 to mode 3 are modes in which control section 170 executes eyesight correction function as the upper-tier function. The eyesight correction function is a function in which eyesight correction may be performed for the user by automatically changing the refractive index of electrically controlled lenses 150 by control section 170 in accordance with the inclination of the head (the inclination of eyewear 100) of the user when the user desires to focus on an object at close range in cases where the user is reading or operating a smartphone, for example.

Mode 1 (eyesight correction/parallel reading mode) is a mode that enables the user to focus on an object at close range in cases where the user is reading or operating a smartphone, for example, in a state of not tilting the head so much. At this time, control section 170 executes the eyesight correction function as the upper-tier function and executes a parallel reading function that assists the user to focus on the object at close range as the lower-tier function by changing the refractive index of electrically controlled lenses 150 when the inclination angle of eyewear 100 sensed by sensing section 160 becomes 20 degrees.

Mode 2 (eyesight correction/intermediate angle reading mode) is a mode that enables the user to focus on an object at close range in cases where the user is reading or operating a smartphone, for example, in a state of slightly tilting the head downward. At this time, control section 170 executes the eyesight correction function as the upper-tier function, and executes an intermediate angle reading function that assists the user to focus on the object at close range as the lower-tier function by changing the refractive index of electrically controlled lenses 150 when the inclination angle of eyewear 100 sensed by sensing section 160 becomes 25 degrees.

Mode 3 (eyesight correction/depression angle reading mode) is a mode that enables the user to focus on an object at close range in cases where the user is reading or operating a smartphone, for example, in a state of tilting the head downward by a larger degree. At this time, control section 170 executes the eyesight correction function as the upper-tier function, and executes a depression angle reading function that assists the user to focus on the object at close range as the lower-tier function by changing the refractive index of electrically controlled lenses 150 when the inclination angle of eyewear 100 sensed by sensing section 160 becomes 30 degrees.

Mode 4 to mode 6 are modes in which control section 170 executes a dimming function as the upper-tier function. The dimming function is a function in which dimming may be performed by automatically changing the transmittance of electrically controlled lenses 150 by control section 170 in accordance with the brightness around the user. Mode 4 to mode 6 are modes that change the transmittance of electrically controlled lenses 150 in accordance with the illuminance as illustrated in Table 2.

**[Table 2]**

| Illuminance (1×) | Transmittance (%) | | |
|---|---|---|---|
| | Weak dimming mode | Medium dimming mode | Strong dimming mode |
| 0 or more and less than 200 | 100 (No voltage application) | 90 | 80 |
| 200 or more and less than 400 | 90 | 80 | 70 |
| 400 or more and less than 600 | 80 | 70 | 60 |
| 600 or more and less than 800 | 70 | 60 | 50 |
| 800 or more and less than 1,000 | 60 | 50 | 40 |
| 1,000 or more and less than 1,200 | 50 | 40 | 30 |
| 1,200 or more and less than 1,400 | 40 | 30 | 20 |
| 1,400 or more | 30 | 20 | 10 |

Mode 4 (weak dimming mode) is a mode that changes the transmittance of electrically controlled lenses 150 in a higher state as compared to mode 5 and mode 6 described below. At this time, control section 170 executes the dimming function as the upper-tier function, and executes a weak dimming function that changes the transmittance of electrically controlled lenses 150 with respect to the illuminance to eyewear 100 sensed by sensing section 160 as shown in "Weak dimming mode" in Table 2 as the lower-tier function.

Mode 5 (medium dimming mode) is a mode that changes the transmittance of electrically controlled lenses 150 in a state that is lower than mode 4 described above and higher than mode 6 described below. At this time, control section 170 executes the dimming function as the upper-tier function, and executes a medium dimming function that changes the transmittance of electrically controlled lenses 150 with respect to the illuminance to eyewear 100 sensed by sensing section 160 as shown in "Medium dimming mode" in Table 2 as the lower-tier function.

Mode 6 (strong dimming mode) is a mode that changes the transmittance of electrically controlled lenses 150 in a lower state as compared to mode 4 and mode 5 described above. At this time, control section 170 executes the dimming function as the upper-tier function, and executes a strong dimming function that changes the transmittance of electrically controlled lenses 150 with respect to the illuminance to eyewear 100 sensed by sensing section 160 as shown in "Strong dimming mode" in Table 2 as the lower-tier function.

Mode 7 to mode 9 are functions in which control section 170 may both change the refractive index of electrically controlled lenses 150 in accordance with the inclination of the head (the inclination of eyewear 100) of the user and change the transmittance of electrically controlled lenses 150 in accordance with the surrounding brightness.

In mode 7 (hybrid/weak dimming mode), control section 170 changes the refractive index of electrically controlled lenses 150 when the inclination angle of eyewear 100 becomes 25 degrees, and changes the transmittance of electrically controlled lenses 150 with respect to the illuminance to eyewear 100 as illustrated in "Weak dimming mode" in Table 2. At this time, control section 170 executes a hybrid function as the upper-tier function, and executes a hybrid/weak dimming function as the lower-tier function.

In mode 8 (hybrid/medium dimming mode), control section 170 changes the refractive index of electrically controlled lenses 150 when the inclination angle of eyewear 100 becomes 25 degrees, and changes the transmittance of electrically controlled lenses 150 with respect to the illuminance to eyewear 100 as illustrated in "Medium dimming mode" in Table 2. At this time, control section 170 executes the hybrid function as the upper-tier function, and executes a hybrid/medium dimming function as the lower-tier function.

In mode 9 (hybrid/strong dimming mode), control section 170 changes the refractive index of electrically controlled lenses 150 when the inclination angle of eyewear 100 becomes 25 degrees, and changes the transmittance of electrically controlled lenses 150 with respect to the illuminance to eyewear 100 as illustrated in "Strong dimming mode" in Table 2. At this time, control section 170 executes the hybrid function as the upper-tier function, and executes a hybrid/strong dimming function as the lower-tier function.

Control section 170 selectively executes any of the abovementioned upper-tier functions when input section 140 receives the first instruction operation, and selectively executes any of the abovementioned lower-tier functions when input section 140 receives the second instruction operation. As a result, control section 170 is capable of easily changing the mode in which the setting of eyewear 100 is realized.

At this time, control section 170 may execute one function that has transitioned in the order determined in advance (for example, in the order of the eyesight correction function, the dimming function, the hybrid function, and the eyesight correction function) out of the abovementioned upper-tier functions in response to the first instruction operation, or may execute one of the abovementioned upper-tier functions determined in advance in association with the operation amount (for example, the movement amount of the swipe operation) of the first instruction operation. One of the abovementioned upper-tier functions determined in advance may be executed in association with the amount of time (for example, the amount of time by which the user has operated the touch sensor) by which the first instruction operation has been detected by input section 140 with use of the timer of sensing section 160.

Control section 170 may execute one function that has transitioned in the order determined in advance (for example, in the order of the parallel reading function, the intermediate angle reading function, the depression angle reading function, and the parallel reading function during the execution of the eyesight correction function) out of the abovementioned lower-tier functions in response to the second instruction operation, or may execute one of the abovementioned lower-tier functions determined in advance in association with the operation amount of the second instruction operation (for example, the movement amount of the swipe operation). One of the abovementioned lower-tier functions determined in advance may be executed in association with the amount of time (for example, the amount of time by which the user has operated the touch sensor) by which the second instruction operation has been detected by input section 140 with use of the timer of sensing section 160.

Storage section 172 stores therein a program for executing the functions of the modes described above by control section 170, and a higher-concept function and a lower-concept function (for example, a correspondence relationship between the function to be executed and the abovementioned operation amount or the order of the abovementioned transition) to be executed by control section 170 in response to the first instruction operation and the second instruction operation.

Power source 180 is a rechargeable battery pack removably held on the rear end portion of temple 120a, and supplies electric power to function sections that consume electric power such as input section 140, control section 170, and sensing section 160. Examples of power source 180 include a nickel metal hydride battery.

### (Usage Example of Eyewear)

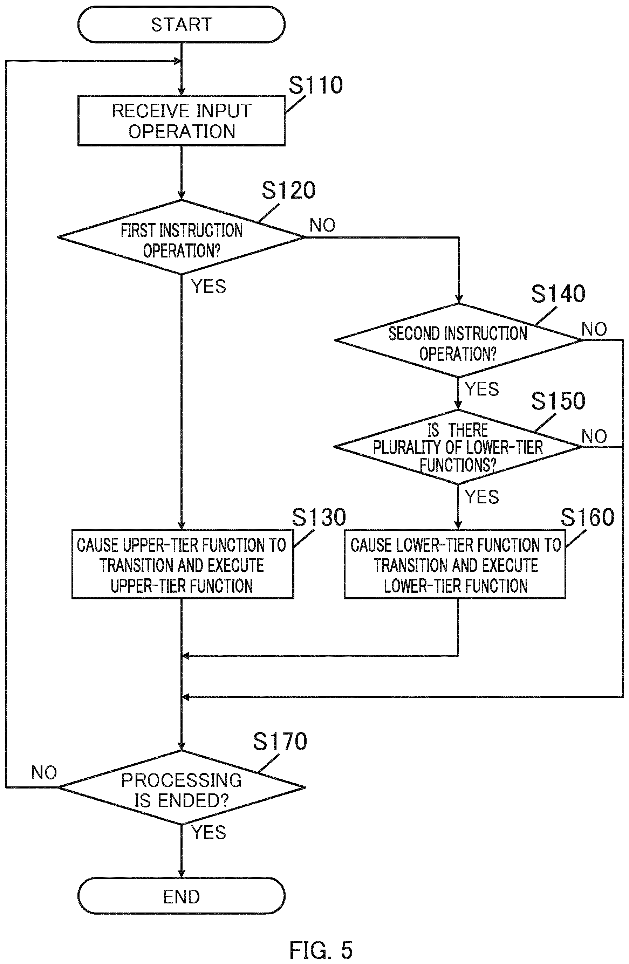

FIG. 5 is a flowchart illustrating an operation example of eyewear 100 when the user wearing eyewear 100 according to this embodiment determines the function in the upper-tier and the lower-tier function executed by control section 170 of eyewear 100 and causes control section 170 to execute those functions. The operation illustrated in FIG. 5 starts when input section 140, control section 170, and sensing section 160 are placed in an ON state by mounting power source 180, for example.

In the description below, when the flow illustrated in FIG. 5 starts, eyewear 100 is assumed to be set to mode 1, that is, the "eyesight correction/parallel reading mode". In other words, it is assumed that control section 170 is executing the eyesight correction function as the upper-tier function and the parallel reading function as the lower-tier function.

First, input section 140 detects the change in electrostatic capacity of the touch sensor caused by the contact of a finger or thumb of the user and the like, for example, and receives the change as an input operation (Step S110). Control section 170 receives a signal indicating that the abovementioned input operation has been received from input section 140, and determines whether the instruction operation is the first instruction operation (the swipe from the front side to the rear side) (Step S120).

When control section 170 determines that the abovementioned instruction operation is the first instruction operation in Step S120, control section 170 causes the upper-tier function to transition in the order of the eyesight correction function, the dimming function, and the hybrid function and executes the upper-tier function to which the function has transitioned (Step S130).

When Step S130 is described in a more detailed manner, control section 170 acquires information indicating that the currently set mode is the "eyesight correction/parallel reading mode" and the upper-tier function corresponding to the mode is the "eyesight correction function". Now, it is stored in storage section 172 in advance that the upper-tier function transitions in the order of the "eyesight correction function", the "dimming function", and the "hybrid function". Therefore, control section 170 causes the upper-tier function that is currently being executed to transition from the "eyesight correction function" to the subsequent "dimming function" in accordance with the order of the transition of the upper-tier function stored in storage section 172, and executes the dimming function. When the upper-tier function is caused to transition to the "dimming function", eyewear 100 only needs to be set to any of the modes including the "dimming function" as the upper-tier function. For example, out of the modes described in Table 1, there are three modes, that is, mode 4 to mode 6 that are modes including the "dimming function" as the upper-tier function. Out of the modes, a mode to be set when the upper-tier function is changed only needs to be specified in advance. For example, in this usage example, it is stored in storage section 172 in advance that mode 4, that is, the "weak dimming mode" is set when the upper-tier function is changed and the "dimming function" is selected. Therefore, in Step S130, control section 170 executes the "dimming function" as a upper-tier function, and executes the "weak dimming function" as the lower-tier function. As a result, eyewear 100 is set to mode 4, that is, the "weak dimming mode". As described above, when control section 170 causes the abovementioned upper-tier functions to transition and executes the functions, the processing transitions to Step S170.

Meanwhile, when control section 170 determines that the abovementioned instruction operation is not the first instruction operation in Step S120, control section 170 then determines whether the abovementioned instruction operation is the second instruction operation (the swipe from the rear side to the front side) (Step S140).

When control section 170 determines that the abovementioned instruction operation is the second instruction operation in Step S140, control section 170 acquires the currently executed mode and determines whether there is a plurality of lower-tier functions corresponding to the currently executed upper-tier function (Step S150).

When Step S150 is described in a more detailed manner, first, control section 170 acquires information indicating that the currently set mode is mode 1, that is, the "eyesight correction/parallel reading mode", the upper-tier function corresponding to the mode is the "eyesight correction function", and the lower-tier function corresponding to the mode is the "parallel reading function". Then, control section 170 checks whether there is a plurality of lower-tier functions associated with the upper-tier function that is currently being executed, that is, the "eyesight correction function" with reference to storage section 172. In this example, there are three lower-tier functions, that is, the "parallel reading function", the "intermediate angle reading function", and the "depression angle reading function" corresponding to the upper-tier function, that is, the "eyesight correction function", and hence control section 170 determines that there is a plurality of lower-tier functions, and proceeds to subsequent Step S160.

Note that, in the abovementioned example, control section 170 determines whether there is a plurality of lower-tier functions corresponding to the upper-tier function. However, the operation of control section 170 in Step S150 is not limited to the above, and control section 170 may determine whether the lower-tier functions corresponding to the upper-tier function that is currently being executed include a function other than the lower-tier function that is currently being executed. In this case, out of the lower-tier functions corresponding to the upper-tier function that is currently set, that is, the "parallel reading function", the "intermediate angle reading function", and the "depression angle reading function", the "intermediate angle reading function" and the "depression angle reading function" are included other than the lower-tier function that is currently set, that is, the "parallel reading function", and hence an affirmative result is obtained in Step S150 and the processing proceeds to subsequent Step S160.

Meanwhile, when control section 170 determines that the abovementioned instruction operation is not the second instruction operation in Step S140, the processing transitions to Step S170.

When control section 170 determines that there is a plurality of lower-tier functions corresponding to the upper-tier function that is currently being executed in Step S150, control section 170 causes the abovementioned lower-tier function to transition in accordance with the predetermined order and executes the lower-tier function to which the function has transitioned while maintaining the execution of the upper-tier function that is currently being executed. As a result, the mode of eyewear 100 transitions from mode 1 to mode 2 (Step S160).

When Step S160 is described in a more detailed manner, control section 170 acquires information indicating that the currently set mode is mode 1, that is, the "eyesight correction/parallel reading mode" and the lower-tier function corresponding to the mode is the "parallel reading function". Now, it is stored in storage section 172 in advance that the lower-tier function corresponding to the upper-tier function, that is, the "eyesight correction function" in mode 1 transitions in the order of the "parallel reading function", the "intermediate angle reading function", and the "depression angle reading function" in response to the second instruction operation. Therefore, control section 170 executes the "intermediate angle reading function" that is the lower-tier function placed after the lower-tier function that is currently set, that is, the "parallel reading function" in the order presented in Step S160. As a result, control section 170 causes the lower-tier function to transition to the intermediate angle reading function and executes the intermediate angle reading function while maintaining the execution of the eyesight correction function that is the upper-tier function. As a result, the setting of eyewear 100 is changed to mode 2, that is, the "eyesight correction/intermediate angle reading mode". When control section 170 causes the abovementioned lower-tier functions to transition and executes the functions, the processing transitions to Step S170.

Meanwhile, when control section 170 determines that a plurality of corresponding lower-tier functions does not exist in Step S150, the processing transitions to Step S170.

Then, control section 170 determines whether the processing needs to be ended (Step S170). For example, control section 170 determines that the processing needs to be ended when the condition for ending the processing determined in advance is satisfied, and determines that the processing does not need to be ended when the abovementioned condition is not satisfied. When the processing needs to be ended as a result of the determination, control section 170 ends the processing in FIG. 5. Meanwhile, when the processing does not need to be ended, the processing returns to the processing before Step S110.

For example, in this usage example, when control section 170 determines that the abovementioned instruction operation is the first instruction operation in Step S120, control section 170 executes the dimming function in Step S130 and performs the weak dimming function that is the lower-tier function set for the dimming function in the default state. Therefore, control section 170 changes the transmittance of electrically controlled lenses 150 so that the transmittance of electrically controlled lenses 150 with respect to the illuminance to eyewear 100 sensed by sensing section 160 becomes a value shown in "Weak dimming mode" in Table 2. At this time, eyewear 100 is set to mode 4, that is, the "weak dimming mode".

When control section 170 determines that the abovementioned instruction operation is not the first instruction operation in Step S120, control section 170 determines that the abovementioned instruction operation is the second instruction operation in Step S140, and control section 170 determines that there is a plurality of corresponding lower-tier functions in Step S150, control section 170 causes the lower-tier function to transition to the intermediate angle reading function and executes the intermediate angle reading function in Step S160 while maintaining the execution of the eyesight correction function that is the upper-tier function. Therefore, when the inclination angle sensed by sensing section 160 exceeds 25 degrees, control section 170 applies voltage to refractive index changeable layer 1530 and changes the refractive index of electrically controlled lenses 150. At this time, eyewear 100 is set to mode 2, that is, the "eyesight correction/intermediate angle reading mode".

When control section 170 determines that the abovementioned instruction operation is not the first instruction operation in Step S120 and control section 170 determines that the abovementioned instruction operation is not the second instruction operation in Step S140, control section 170 continuingly executes the eyesight correction function that is the upper-tier function and the parallel reading function that is the lower-tier function that are currently being executed. Therefore, control section 170 applies voltage to refractive index changeable layer 1530 and changes the refractive index of electrically controlled lenses 150 when the inclination angle sensed by sensing section 160 exceeds 20 degrees. At this time, the setting of eyewear 100 is maintained at mode 1, that is, the "eyesight correction/parallel reading mode".

Note that, also when control section 170 determines that the abovementioned instruction operation is not the first instruction operation in Step S120, control section 170 determines that the abovementioned instruction operation is the second instruction operation in Step S140, and control section 170 determines that a plurality of corresponding lower-tier functions does not exist in Step S150, control section 170 continuingly executes the upper-tier function and the parallel reading function that is the lower-tier function that are currently being executed. Also at this time, the setting of eyewear 100 is maintained at mode 1, that is, the "eyesight correction/parallel reading mode".

According to this embodiment, control section 170 of eyewear 100 can be caused to execute a plurality of functions with a small amount of input and a simple operation. As a result, it is easy for the user to use eyewear 100 in a mode (setting) corresponding to the user's own preference and aptitude.

### (Modified Usage Example of Eyewear)

In the abovementioned usage example, control section 170 selectively executes one function that has transitioned in the order determined in advance out of the functions of each tier in accordance with whether there is the first instruction operation or the second instruction operation. However, control section 170 may selectively execute the function in each tier determined in advance in association with the operation amount of the first instruction operation and the second instruction operation.

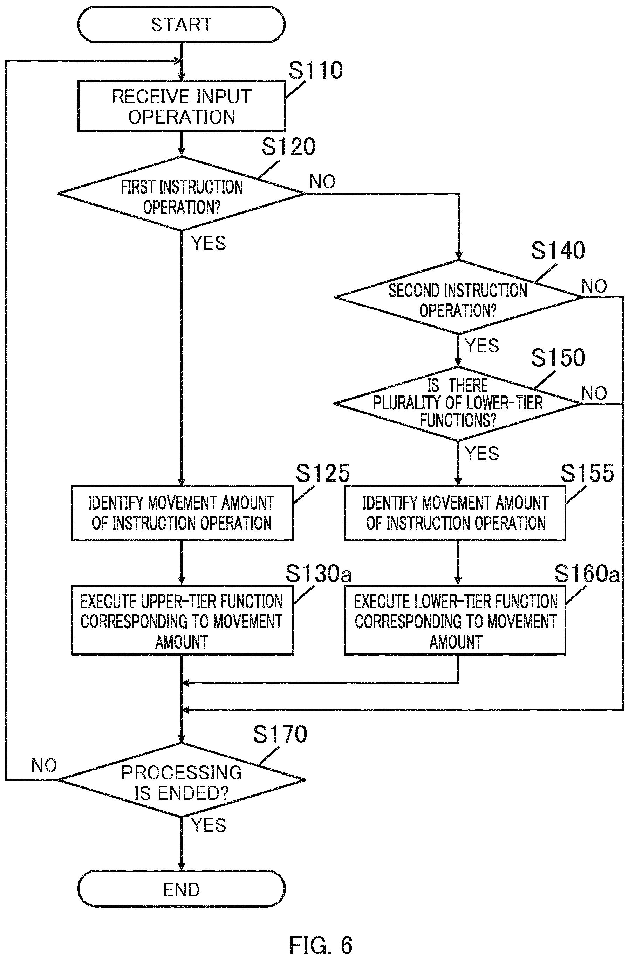

FIG. 6 is a flowchart illustrating an operation example of eyewear 100 when the user wearing eyewear 100 including input section 140 also capable of identifying the operation amount of the instruction operation determines the function in the upper-tier and the lower-tier function executed by control section 170 of eyewear 100 and causes the functions to be executed. The operation illustrated in FIG. 6 starts when control section 170 and sensing section 160 are placed in an ON state when power source 180 is mounted, for example.

In the description below, when the flow illustrated in FIG. 6 starts, eyewear 100 is assumed to be set to mode 1, that is, the "eyesight correction/parallel reading mode". In other words, control section 170 assumes that the eyesight correction function is executed as the upper-tier function and the parallel reading function is executed as the lower-tier function.

At this time, in Step S110 described above, input section 140 detects and receives the change in electrostatic capacity of the touch sensor caused by the contact of a finger or thumb of the user and the like, for example (whether there is an input operation), and also detects and receives the number of touch sensors of which electrostatic capacity has changed (the operation amount of the input operation). When control section 170 receives a signal indicating that the abovementioned input operation is received from input section 140, control section 170 first determines whether the instruction operation is the first instruction operation (the swipe from the front side to the rear side) (Step S120).

When control section 170 determines that the abovementioned instruction operation is the first instruction operation in Step S120, control section 170 further identifies which of the movement amounts set as three stages in advance is the movement amount to which the operation amount (movement amount) included in the received signal corresponds (Step S125).

Then, control section 170 executes the upper-tier function corresponding to the identified operation amount (movement amount) (Step S130a).

When Step S130a is described in a more detailed manner, control section 170 acquires information indicating that the currently set mode is mode 1, that is, the "eyesight correction/parallel reading mode" and the upper-tier function corresponding to the mode is the "eyesight correction function". Now, it is stored in storage section 172 in advance that any of the "eyesight correction function", the "dimming function", and the "hybrid function" is executed for the upper-tier function in association with the movement amount of the first instruction operation.

Therefore, control section 170 directly executes the eyesight correction function that is the upper-tier function in Step S130a when the identified movement amount is "1" (smallest) out of the three stages. In other words, control section 170 continues to execute the eyesight correction function that is the upper-tier function and the parallel reading function that is the lower-tier function without changing either of the functions. At this time, the setting of eyewear 100 is unchanged from mode 1, that is, the "eyesight correction/parallel reading mode".

Meanwhile, control section 170 executes the dimming function that is the upper-tier function in Step S130a when the identified movement amount is "2" (slightly small) out of the three stages. At this time, eyewear 100 only needs to be set to any of the modes including the "dimming function" as the upper-tier function. For example, out of the modes described in Table 1, there are three modes, that is, mode 4 to mode 6 that are modes including the "dimming function" as the upper-tier function. Out of the modes, a mode to be set when the upper-tier function is changed only needs to be specified in advance. For example, in this usage example, it is stored in storage section 172 in advance that mode 4, that is, the "weak dimming mode" is set when the upper-tier function is changed and the "dimming function" is selected. Therefore, in Step S130a, control section 170 executes the "dimming function" as the upper-tier function and executes the "weak dimming function" as the lower-tier function. As a result, eyewear 100 is set to mode 4, that is, the "weak dimming mode".

Control section 170 executes the hybrid function that is the upper-tier function in Step S130a when the identified movement amount is "3" (largest) out of the three stages. At this time, eyewear 100 only needs to be set to any of the modes including the "hybrid function" as the upper-tier function. For example, out of the modes described in Table 1, there are three modes, that is, mode 7 to mode 9 that are modes including the "hybrid function" as the upper-tier function. Out of the modes, a mode to be set when the upper-tier function is changed only needs to be specified in advance. For example, in this usage example, it is stored in storage section 172 in advance that mode 7, that is, the "hybrid/weak dimming mode" is set when the upper-tier function is changed and the "hybrid function" is selected. Therefore, control section 170 executes the "hybrid function" as the upper-tier function and executes the "hybrid/weak dimming function" as the lower tier function in Step S130a. As a result, eyewear 100 is set to mode 7, that is, the "hybrid/weak dimming mode".

As described above, when control section 170 causes the abovementioned upper-tier functions to transition and executes the functions, the processing transitions to Step S170.

Meanwhile, when control section 170 determines that the abovementioned instruction operation is not the first instruction operation in Step S120, control section 170 determines that the abovementioned instruction operation is the second instruction operation in Step S140, and control section 170 determines that there is a plurality of corresponding lower-tier functions in Step S150, control section 170 further identifies which of the movement amounts set as three stages in advance is the movement amount to which the operation amount (movement amount) included in the received signal corresponds (Step S155).

Then, control section 170 executes the lower-tier function corresponding to the identified operation amount (movement amount) while maintaining the execution of the upper-tier function that is currently being executed (Step S160a).

When Step S160a is described in a more detailed manner, control section 170 acquires information indicating that the currently set mode is mode 1, that is, the "eyesight correction/parallel reading mode" and the lower-tier function corresponding to the mode is the "parallel reading function". Now, it is stored in storage section 172 in advance that any of the "parallel reading function", the "intermediate angle reading function", and the "depression angle reading function" is executed in association with the movement amount of the second instruction operation as the lower-tier function corresponding to the upper-tier function, that is, the "eyesight correction function" in mode 1.

Therefore, control section 170 executes the parallel reading function that is the lower-tier function in Step S160a when the identified movement amount is "1" (smallest) out of the three stages. In other words, control section 170 continues to execute the eyesight correction function that is the upper-tier function and the parallel reading function that is the lower-tier function without changing either of the functions. At this time, the setting of eyewear 100 is unchanged from mode 1, that is, the "eyesight correction/parallel reading mode".

Meanwhile, control section 170 executes the intermediate angle reading function that is the lower-tier function in Step S160a when the identified movement amount is "2" (slightly small) out of the three stages. As a result, control section 170 executes the intermediate angle reading function that is the lower-tier function while maintaining the execution of the eyesight correction function that is the upper-tier function. As a result, the setting of eyewear 100 is changed to mode 2, that is, the "eyesight correction/intermediate angle reading mode".

Control section 170 executes the depression angle reading function that is the lower-tier function in Step S160a when the identified movement amount is "3" (largest) out of the three stages. As a result, control section 170 executes the depression angle reading function that is the lower-tier function while maintaining the execution of the eyesight correction function that is the upper-tier function. As a result, the setting of eyewear 100 is changed to mode 3, that is, the "eyesight correction/depression angle reading mode".

Similarly, when the upper-tier function that is currently being executed is the dimming function, control section 170 executes the strong dimming function that is the lower-tier function when the identified movement amount is "1" (smallest) out of the three stages, executes the medium dimming function that is the lower-tier function when the identified movement amount is "2" (slightly small), and executes the weak dimming function that is the lower-tier function when the identified movement amount is "3" (largest) while maintaining the execution of the dimming function that is the upper-tier function. As a result, the setting of eyewear 100 is changed to mode 4, that is, the "weak dimming mode", mode 5, that is, the "medium dimming mode", and mode 6, that is, the "strong dimming mode".

Similarly, when the upper-tier function that is currently being executed is the hybrid function, control section 170 executes the hybrid/strong dimming function that is the lower-tier function when the identified movement amount is "1" (smallest) out of the three stages, executes the hybrid/medium dimming function that is the lower-tier function when the identified movement amount is "2" (slightly small), and executes the hybrid/weak dimming function that is the lower-tier function when the identified movement amount is "3" (largest) while maintaining the execution of the hybrid function that is the upper-tier function. As a result, the setting of eyewear 100 is changed to mode 7, that is, the "hybrid/weak dimming mode", mode 8, that is, the "hybrid/medium dimming mode", and mode 9, that is, the "hybrid/strong dimming mode".

Note that, in this modified usage example, an aspect in which both of the execution of the upper-tier function in response to the first instruction operation and the execution of the lower-tier function in response to the second instruction operation are caused to correspond to the operation amount is described, but only the execution of the upper-tier function in response to the first instruction operation may be caused to correspond to the operation amount, or only the execution of the lower-tier function in response to the second instruction operation may be caused to correspond to the operation amount.

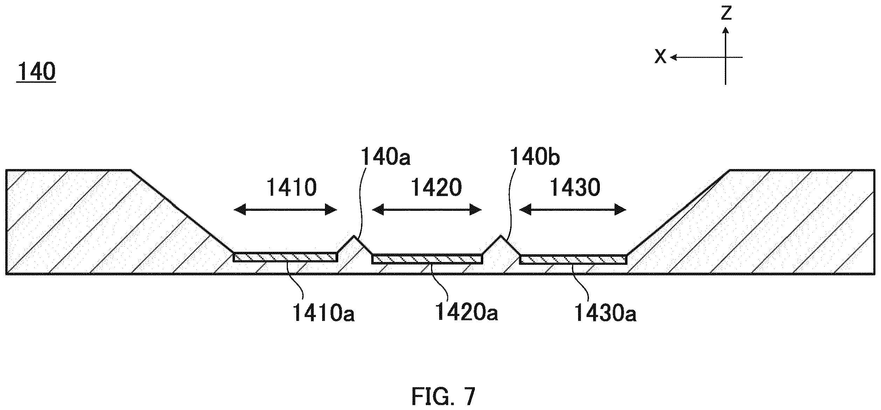

As illustrated in FIG. 7 that is a schematic cross-sectional view of input section 140 in this modified usage example, in order to enable the operation amount (movement amount) of the instruction operation to be identified by the sense of touch, input section 140 may have convex portions that enable the user to identify the movement amount of a finger or thumb along input section 140 while having a shape that does not block the movement of the finger or thumb from the front side to the rear side and from the rear side to the front side.

In FIG. 7, input section 140 has two convex portions 140a and 140b that are identifiable by the sense of touch by the user but do not block the movement of the finger or thumb because the height thereof is lower than the end portion of input section 140. Input section 140 has first operation region 1410, second operation region 1420, and third operation region 1430 of which borders are the end portions of input section 140 and convex portions 140a and 140b. Independent touch sensors 1410a, 1420a, and 1430a are provided in the regions.

When the user desires to perform the instruction operation of "1" out of the three stages, the user only needs to slide the finger or thumb until the finger or thumb abuts on first convex portion 140a from the front-side end portion of input section 140. Similarly, when the user desires to perform the instruction operation of "2" out of the three stages, the user only needs to slide the finger or thumb until the finger or thumb abuts on second convex portion 140b from the front-side end portion of input section 140. When the user desires to perform the instruction operation of "3" out of the three stages, the user only needs to slide the finger or thumb to the rear-side end portion of input section 140 from the front-side end portion of input section 140. As described above, input section 140 illustrated in FIG. 7 causes the adjustment of the movement amount of the instruction operation by the user to be easy.

According to this modified usage example, eyewear 100 can be caused to execute a plurality of functions with a smaller amount of input and a simple operation. Therefore, also in this modified usage example, the user can easily use eyewear 100 in a mode (setting) corresponding to the user's own preference and aptitude.

### (Modified Example of Embodiment 1)

In the abovementioned description, the swipe from the front side to the rear side is the first instruction operation and the swipe from the rear side to the front side is the second instruction operation, but the directions of the instruction operations may be reversed. In other words, the swipe from the rear side to the front side may be the first instruction operation and the swipe from the front side to the rear side may be the second instruction operation.

In the abovementioned description, the swipe along input section 140 that is a touch sensor is the instruction operation, but the instruction operation is not limited thereto, and tapping and the like may be caused to correspond to the first instruction operation or the second instruction operation.

The upper-tier functions and the lower-tier functions used in the abovementioned description are merely examples, and the functions executed by control section 170 are not limited thereto.

For example, in the abovementioned description, only the transmittance is changeable for the hybrid function and a plurality of lower-tier functions of which change patterns of the transmittance are different are set. However, it is possible to cause only the refractive index to be changeable for the hybrid function and a plurality of lower-tier functions of which change patterns of the refractive index are different may be set, or both the transmittance and the refractive index may be changeable and a plurality of lower-tier functions of which change patterns of either or both of the transmittance and the refractive index are different may be set.

In the abovementioned description, the eyesight correction function, the dimming function, and the hybrid function transition in the order presented and are executed in response to the first instruction operation, but the order of the transition in response to the first instruction operation is not limited to the order presented.

Control section 170 may be able to execute an upper-tier function other than the three functions described above. For example, control section 170 may be able to execute a sleep function in which the power source is supplied to only some function sections such as the sensor, an OFF function in which the power source is supplied to substantially none of the function sections, and the like in response to the first instruction operation. For those functions, the change condition changed in response to the second instruction operation does not necessarily need to be provided, or control section 170 may automatically transition to the sleep function or the OFF function when the reception of the instruction operation by input section 140 or the detection of the inclination angle or the illuminance by sensing section 160 is not performed for a predetermined amount of time, and the amount of waiting time (change condition) until control section 170 transitions to those functions may be changeable in accordance with the second instruction operation.

For example, the sleep function or the OFF function described above may include, as lower-tier functions, a short-time OFF function that automatically transitions to the sleep function or the OFF function when the amount of waiting time in which the reception of the instruction operation by input section 140 or the detection of the inclination angle or the illuminance by sensing section 160 is not performed is one minute, an intermediate-time OFF function that automatically transitions to the sleep function or the OFF function when the abovementioned amount of waiting time is three minutes, and a long-time OFF function that automatically transitions to the sleep function or the OFF function when the amount of waiting time is five minutes.

The upper-tier functions and the lower-tier functions executable by control section 170 are not limited to the functions described above. Control section 170 may be able to execute other upper-tier functions or lower-tier functions, or may be able to execute only some of the upper-tier functions and the lower-tier functions described above. Control section 170 may be able to execute and stop (ON and OFF) one upper-tier function in response to the first instruction operation, and may be able to execute the lower-tier function corresponding to the abovementioned upper-tier function that is being executed in response to the second instruction operation.

In an example not covered by the invention, sensing section 160 only needs to be able to detect the change condition used for executing the upper-tier functions and lower-tier functions described above, and may be a position detect sensor such as a global positioning system (GPS) capable of measuring the position of eyewear 100, a communication module that can be connected to a predetermined mobile device such as a smartphone with Bluetooth ("Bluetooth" is a registered trademark of Bluetooth SIG) and the like, an image pickup device such as a camera for identifying and sensing natural light and light from a fluorescent lamp, an acceleration sensor, an angular velocity sensor, or a gyro sensor for sensing the moving state of eyewear 100 or states such as the posture of the user wearing eyewear 100, and the like.

In an example not covered by the invention, the first instruction operation and the second instruction operation described above do not necessarily need to be the instruction operations from the user wearing eyewear 100, and may be instruction operations from a non-wearer close to eyewear 100.

### [Embodiment 2]

### (Eyewear)

An eyewear according to Embodiment 2 of the present invention is different from that of Embodiment 1 only in that, in eyewear 100 illustrated in FIG. 1 and FIG. 2, sensing section 160 further includes a communication module that can be connected to a predetermined mobile device such as a smartphone with Bluetooth ("Bluetooth" is a registered trademark of Bluetooth SIG) and the like, and in terms of the configuration of input section 140 and control section 170. Therefore, only the configuration and the usage example of input section 140 and control section 170 are described and the description of components overlapping with those of Embodiment 1 is omitted below.

Also in this embodiment, input section 140 includes a plurality of touch sensors arranged in a row from the front side to the rear side of temple 120a, and identifies and receives a first instruction operation of swiping from the front side to the rear side along the plurality of touch sensors described above, a second instruction operation of swiping from the rear side to the front side along the plurality of touch sensors described above that is a direction substantially opposite from the abovementioned first direction, and a third instruction operation of tapping any of the abovementioned plurality of touch sensors without swiping.

Control section 170 determines whether the input operation received by input section 140 is any of the first instruction operation, the second instruction operation, or the third instruction operation, and the optical property of electrically controlled lenses 150 described above is changed by executing the function in each tier corresponding to the instruction operation included in the function system having a hierarchical structure when the abovementioned input operation is any of the first instruction operation, the second instruction operation, or the third instruction operation.

In this embodiment, the setting of eyewear 100 may be changed to any of six modes shown in Table 3.

**[Table 3]**

| Mode name | Upper-tier function | Middle-tier function | Lower-tier function |
|---|---|---|---|
| Mode 1: Eyesight correction/reading mode | Eyesight correction function | Automatic function | Reading function |
| Mode 2: Eyesight correction/mobile mode | | | Mobile function |
| Mode 3: Eyesight correction/manual mode | | Manual function | - |
| Mode 4: Eyesight correction dimming/indoor mode | Eyesight correction dimming function | Automatic function | Indoor function |
| Mode 5: Eyesight correction dimming/outdoor mode | | | Outdoor function |
| Mode 6: Eyesight correction dimming/manual mode | | Manual function | - |

Mode 1 to mode 3 are modes in which control section 170 executes an eyesight correction function as the upper-tier function. The eyesight correction function is a function in which eyesight correction may be performed for the user to focus on an object at close range by automatically changing the refractive index of electrically controlled lenses 150 by control section 170 when the user is focusing on the object at close range, for example, when the user is reading or operating a smartphone.

Mode 1 (eyesight correction/reading mode) is a mode that automatically changes the refractive index of electrically controlled lenses 150 when the user is reading. At this time, control section 170 executes the eyesight correction function as the upper-tier function, control section 170 executes an automatic function that automatically changes the refractive index of electrically controlled lenses 150 when the change condition is satisfied as the middle-tier function, and executes a reading function that changes the refractive index of electrically controlled lenses 150 when the inclination angle of eyewear 100 sensed by sensing section 160 becomes a predetermined value (for example, 25 degrees) as the lower-tier function.

Mode 2 (eyesight correction/mobile mode) is a mode that enables reading or the operation of a smartphone when the user operates the smartphone and the like while slightly tilting the head downward. At this time, control section 170 executes the eyesight correction function as the upper-tier function, executes the automatic function similar to that in mode 1 as the middle-tier function, and executes a mobile function that changes the refractive index of electrically controlled lenses 150 when control section 170 determines that a predetermined mobile device is close when the abovementioned communication module that is sensing section 160 is connected to the abovementioned predetermined mobile device as the lower-tier function.

Mode 3 (eyesight correction/manual mode) is a mode that changes the refractive index of electrically controlled lenses 150 in accordance with the input operation from the user and changes the refractive index of electrically controlled lenses 150 only when the user desires to change the refractive index. For example, in mode 3, control section 170 detects that the user is in contact with the touch sensor by a method other than the first instruction operation to the third instruction operation, and changes the refractive index of electrically controlled lenses 150. At this time, control section 170 executes the eyesight correction function as the upper-tier function, and executes a manual function that changes the refractive index of electrically controlled lenses 150 when the input operation from the user is received as the middle-tier function. Note that the lower-tier function does not exist in mode 3, and hence control section 170 does not execute the lower-tier function in mode 3.

Mode 4 to mode 6 are modes in which control section 170 executes an eyesight correction dimming function as the upper-tier function. The eyesight correction dimming function is a function in which the eyesight correction and the dimming may be independently performed by automatically changing the refractive index or the transmittance of electrically controlled lenses 150 by control section 170 when the change condition is satisfied.

Mode 4 (eyesight correction dimming/indoor mode) is a mode in which control section 170 changes the refractive index and the transmittance of electrically controlled lenses 150 in accordance with when the user is reading indoors, for example. At this time, control section 170 executes the eyesight correction dimming function as the upper-tier function, executes the automatic function similar to that in mode 1 as the middle-tier function, and executes an indoor function that changes the transmittance of electrically controlled lenses 150 to a value corresponding to the illuminance of light toward eyewear 100 in accordance with the medium dimming mode shown in Table 2, for example, and changes the refractive index of electrically controlled lenses 150 when the inclination angle becomes a predetermined value (for example, 25 degrees) as the lower-tier function.

Mode 5 (eyesight correction dimming/outdoor mode) is a mode in which control section 170 changes the transmittance of electrically controlled lenses 150 in accordance with when the user carries out activity outdoors. At this time, control section 170 executes the eyesight correction dimming function as the upper-tier function, executes the automatic function similar to that in mode 1 as the middle-tier function, and executes an outdoor function that changes the transmittance of electrically controlled lenses 150 to a value corresponding to the illuminance of light toward eyewear 100 but does not change the refractive index of electrically controlled lenses 150 in association with the inclination angle as the lower-tier function.

Mode 6 (eyesight correction dimming/manual mode) is a mode that changes the transmittance of electrically controlled lenses 150 in accordance with the input operation from the user and only changes the transmittance of electrically controlled lenses 150 when the user desires to change the transmittance. At this time, control section 170 executes the eyesight correction dimming function as the upper-tier function, and executes the manual function similar to that in mode 3 as the middle-tier function. Note that the lower-tier function does not exist in mode 6, and hence control section 170 does not execute the lower-tier function in mode 6.

Control section 170 selectively executes any of the abovementioned upper-tier functions when input section 140 receives the first instruction operation, selectively executes any of the abovementioned middle-tier functions when input section 140 receives the second instruction operation, and selectively executes any of the abovementioned lower-tier functions when input section 140 receives the third instruction operation. As a result, control section 170 is capable of easily changing the mode in which the setting of eyewear 100 is realized.

At this time, control section 170 may cause the abovementioned upper-tier functions to successively transition in response to the first instruction operation and execute the functions, or may execute one of the abovementioned upper-tier functions determined in advance in association with the content (for example, the operation amount of the input operation) of the first instruction operation.

Control section 170 may cause the abovementioned middle-tier functions to successively transition in response to the second instruction operation and execute the functions, or may execute one of the abovementioned middle-tier functions determined in advance in association with the content (for example, the operation amount of the input operation) of the second instruction operation.

Control section 170 may cause the abovementioned lower-tier functions to successively transition in accordance with the third instruction operation and execute the functions, or may execute one of the abovementioned lower-tier functions determined in advance in association with the content (for example, the operation amount of the input operation) of the third instruction operation.

### (Usage Example of Eyewear)

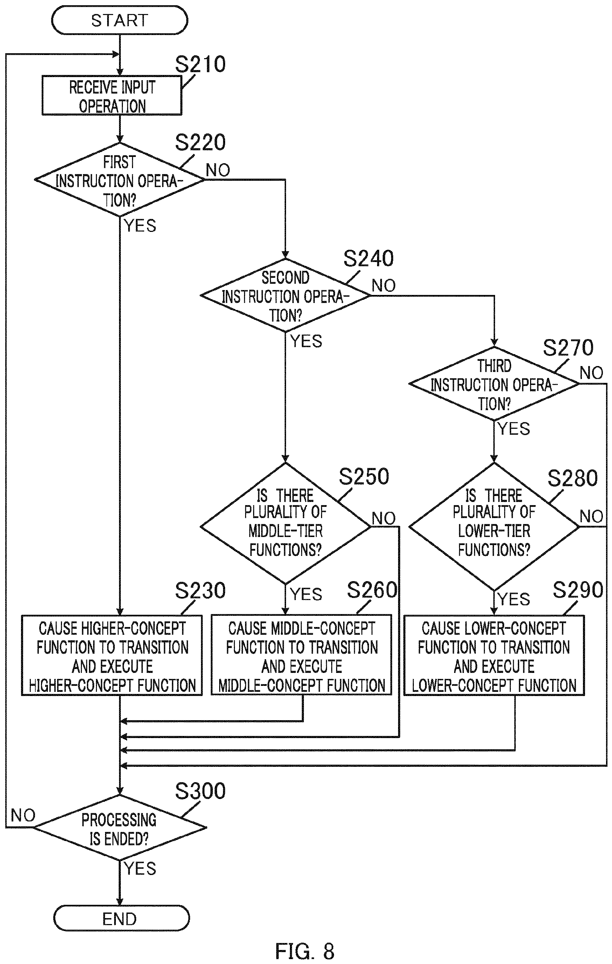

FIG. 8 is a flowchart illustrating an operation example of eyewear 100 when the user wearing eyewear 100 according to this embodiment determines the function in the upper-tier and the lower-tier function executed by control section 170 of eyewear 100 and causes control section 170 to execute those functions. The operation illustrated in FIG. 8 starts when input section 140, control section 170, and sensing section 160 are placed in ON state when power source 180 is mounted, for example.

In the description below, when the flow illustrated in FIG. 8 starts, eyewear 100 is assumed to be set to mode 1, that is, the "eyesight correction/reading mode". In other words, it is assumed that control section 170 executes the eyesight correction function as the upper-tier function, executes the automatic function as the middle-tier function, and executes the reading function as the lower-tier function.

First, input section 140 detects the change in electrostatic capacity of the touch sensor caused by the contact of a finger or thumb of the user and the like and receives the change as an input operation (Step S210). When control section 170 receives a signal indicating that the abovementioned input operation is received from input section 140, control section 170 determines whether the instruction operation is the first instruction operation (the swipe from the front side to the rear side) (Step S220).

When control section 170 determines that the abovementioned instruction operation is the first instruction operation in Step S220, control section 170 causes the upper-tier function to transition and executes the upper-tier function to which the function has transitioned (Step S230).

When Step S230 is described in a more detailed manner, control section 170 acquires information indicating that the currently set mode is the "eyesight correction/reading mode" and the upper-tier function corresponding to the mode is the "eyesight correction function". Now, it is stored in storage section 172 in advance that the upper-tier function transitions in the order of the "eyesight correction function" and the "eyesight correction dimming function". Therefore, in accordance with the order of the transition of the upper-tier functions stored in storage section 172, the upper-tier function that is currently being executed transitions from the "eyesight correction function" to the subsequent "eyesight correction dimming function", and the eyesight correction dimming function is executed. When the upper-tier function is caused to transition to the "eyesight correction dimming function", eyewear 100 only needs to be set any of the modes including the "eyesight correction dimming function" as the upper-tier function. For example, out of the modes described in Table 3, there are three modes, that is, mode 4 to mode 6 that are modes including the "eyesight correction dimming function" as the upper-tier function. Out of the modes, the mode to be set when the upper-tier function is changed only needs to be specified in advance. In this usage example, it is stored in storage section 172 in advance that mode 4, that is, the "eyesight correction dimming/indoor mode" is set when the upper-tier function is changed and the "eyesight correction dimming function" is selected. Therefore, in Step S230, control section 170 executes the "eyesight correction dimming function" as the upper-tier function and executes the "indoor function" as the lower-tier function. As a result, eyewear 100 is set to mode 4, that is, the "eyesight correction dimming/indoor mode". As described above, when control section 170 causes the function to transition the abovementioned upper-tier functions and executes the functions, the processing transitions to Step S300.

Meanwhile, when control section 170 determines that the abovementioned instruction operation is not the first instruction operation in Step S220, control section 170 then determines whether the abovementioned instruction operation is the second instruction operation (the swipe from the rear side to the front side) (Step S240).

When control section 170 determines that the abovementioned instruction operation is the second instruction operation in Step S240, control section 170 acquires the mode corresponding to the upper-tier function that is currently being executed, and determines whether there is a plurality of middle-tier functions that is currently being executed (Step S250).

When Step S250 is described in a more detailed manner, first, control section 170 acquires information indicating that the currently set mode is mode 1, that is, the "eyesight correction/reading mode", the upper-tier function corresponding to the mode is the "eyesight correction function", and the middle-tier function corresponding to the mode is the "automatic function". Then, it is checked whether there is a plurality of middle-tier functions associated with the upper-tier function that is currently being executed, that is, the "eyesight correction function". In this usage example, there are two of middle-tier functions, that is, the "automatic function" and the "manual function" corresponding to the upper-tier function, that is, the "eyesight correction function", and hence control section 170 determines that there is a plurality of middle-tier functions, and proceeds to subsequent Step S260.

Also at this time, as with Embodiment 1, control section 170 may determine whether the middle-tier functions corresponding to the upper-tier function that is currently being executed include a function other than the middle-tier function that is currently being executed. In this case, out of the middle-tier functions, that is, the "automatic function" and the "manual function" corresponding to the upper-tier function that is currently set, the "manual function" is included besides the middle-tier function that is currently set, that is, the "automatic function", and hence an affirmative result is obtained in Step S250 and the processing proceeds to subsequent Step S260.

When Step S260 is described in a more detailed manner, control section 170 acquires information indicating that the currently set mode is mode 1, that is, the "eyesight correction/reading mode" and the middle-tier function corresponding to the mode is the "automatic function". Now, it is stored in storage section 172 in advance that the middle-tier function corresponding to the upper-tier function, that is, the "eyesight correction function" in mode 1 transitions in the order of the "automatic function" and the "manual function" in response to the second instruction operation. Therefore, control section 170 executes the "manual function" that is the middle-tier function placed after the middle-tier function that is currently set, that is, the "automatic function" in the order presented in Step S260. As a result, control section 170 causes the middle-tier function to transition to the manual function and executes the manual function while maintaining the execution of the eyesight correction function that is the upper-tier function. As a result, the setting of eyewear 100 is changed to mode 3, that is, the "eyesight correction/manual mode". When control section 170 causes the abovementioned middle-tier function to transition and executes the function, the processing transitions to Step S300.

Note that the mode to be set when the middle-tier function is changed may be specified in advance also at this time. For example, it is stored in storage section 172 in advance that mode 1, that is, the "eyesight correction/reading mode" is set when the middle-tier function is changed from the "manual function" to the "automatic function" while the "eyesight correction function" is being executed as the function in the upper-tier, and mode 1, that is, the "eyesight correction/reading mode" is set, the "eyesight correction function" is executed as the upper-tier function, the "automatic function" is executed as the middle-tier function, and the "reading function" is executed as the lower-tier function in Step S260.

Meanwhile, when control section 170 determines that there are no corresponding middle-tier functions in Step S250, the processing transitions to Step S300.

When control section 170 determines that the abovementioned instruction operation is not the second instruction operation in Step S240, control section 170 then determines whether the abovementioned instruction operation is the third instruction operation (tapping without movement) (Step S270).

When control section 170 determines that the abovementioned instruction operation is the third instruction operation in Step S270, control section 170 determines whether there is a plurality of lower-tier functions corresponding to the middle-tier function that is currently being executed (Step S280).

When Step S280 is described in a more detailed manner, first, control section 170 acquires information indicating that the currently set mode is mode 1, that is, the "eyesight correction/reading mode", the upper-tier function corresponding to the mode is the "eyesight correction function", the middle-tier function corresponding to the mode is the "automatic function", and the lower-tier function corresponding to the mode is the "reading function". Then, it is checked whether there is a plurality of lower-tier functions associated with the upper-tier function, that is, the "eyesight correction function" and the middle-tier function, that is, the "automatic function" that are currently being executed. In this usage example, there are two lower-tier functions, that is, the "reading function" and the "mobile function" that correspond to the upper-tier function, that is, the "eyesight correction function" and the middle-tier function, that is, the "automatic function", and hence control section 170 determines that there is a plurality of lower-tier functions and proceeds to subsequent Step S290.

Also at this time, as with Embodiment 1, control section 170 may determine whether the lower-tier functions corresponding to the middle-tier function that is currently being executed include a function other than the lower-tier function that is currently being executed. In this case, out of the lower-tier functions, that is, the "reading function" and the "mobile function" corresponding to the upper-tier function and the middle-tier function that are currently set, the "mobile function" is included besides the lower-tier function, that is, the "reading function" that is currently being executed, and hence an affirmative result is obtained in Step S280 and the processing proceeds to subsequent Step S290.

When control section 170 determines that there is a plurality of lower-tier functions corresponding to the middle-tier function that is currently being executed in Step S280, control section 170 causes the abovementioned lower-tier function to transition in accordance with a predetermined order and executes the lower-tier function to which the function has transitioned while maintaining the execution of the upper-tier function and the middle-tier function that are currently being executed. In other words, the setting mode transitions from mode 1 to mode 2 (Step S290). In this usage example, when the flow starts, control section 170 executes the eyesight correction function as the upper-tier function, executes the automatic function as the middle-tier function, and executes the reading function as the lower-tier function, and eyewear 100 is set to mode 1. Now, it is stored in storage section 172 in advance that the lower-tier function corresponding to the upper-tier function, that is, the "eyesight correction function" and the middle-tier function, that is, the "automatic function" in mode 1 transitions in the order of the "reading function" and the "mobile function" in accordance with the third instruction operation. Therefore, control section 170 causes the lower-tier function to transition to the mobile function and be executed while maintaining the execution of the eyesight correction function that is the upper-tier function and the automatic function that is the middle-tier function in Step S290. As a result, the setting of eyewear 100 is changed to mode 2, that is, the "eyesight correction/mobile mode". When control section 170 causes the abovementioned lower-tier function to transition and be executed, the processing transitions to Step S300.

Meanwhile, when control section 170 determines that a plurality of corresponding lower-tier functions does not exist in Step S280, the processing transitions to Step S300.

When control section 170 determines that the abovementioned instruction operation is not the third instruction operation in Step S270, the processing transitions to Step S300.

Then, control section 170 determines whether the processing needs to be ended (Step S300). For example, control section 170 determines that the processing needs to be ended when the condition for ending the processing determined in advance is satisfied, and determines that the processing does not need to be ended when the abovementioned condition is not satisfied. When the processing needs to be ended as a result of the determination, control section 170 ends the processing in FIG. 8. Meanwhile, when the processing does not need to be ended, the processing returns to the processing before Step S210.

According to this embodiment, by increasing the instruction operations corresponding to each tier of the function system having a hierarchical structure, each function belonging to a function system having a hierarchical structure having more layers can even be executed by control section 170 of eyewear 100 with a small amount of input and a simple operation. Therefore, also in this embodiment, it is easy for the user to use eyewear 100 in a mode (setting) corresponding to the user's own preference and aptitude.

### (Modified Example of Embodiment 2)

Also in this embodiment, as with the modified example of Embodiment 1 described above, input section 140 including a plurality of touch sensors may also be able to detect the operation amount of the instruction operation for the first instruction operation and the second instruction operation, and control section 170 may execute one upper-tier function or lower-tier function defined in association with the operation amount of the first instruction operation and the second instruction operation.

Also in this embodiment, the upper-tier functions, the middle-tier functions, and the lower-tier functions used in the abovementioned description are merely examples, and the functions executed by control section 170 are not limited thereto. For example, control section 170 may be able to execute each function described in Embodiment 1.

Control section 170 may be able to execute an upper-tier function other than the two functions described above. For example, control section 170 may be able to execute the dimming function, the sleep function in which the power source is supplied to only some function sections such as the sensor, the OFF function in which the power source is supplied to substantially none of the function sections, and the like described in Embodiment 1 in response to the first instruction operation.

Control section 170 may be able to execute each lower-tier function in Embodiment 1 described above in accordance with a fourth instruction operation (for example, an operation of tapping twice in succession without swiping) different from the first instruction operation to the third instruction operation.

Also in this embodiment, the upper-tier functions and the lower-tier functions executable by control section 170 are not limited to the functions described above. Control section 170 may be able to execute other upper-tier functions or lower-tier functions, or may be able to execute only some of the upper-tier functions and the lower-tier functions described above. Control section 170 may be able to execute and stop (ON and OFF) one upper-tier function in response to the first instruction operation, and may be able to execute the lower-tier function corresponding to the abovementioned upper-tier function that is being executed in response to the second instruction operation.

Also in this embodiment, sensing section 160 only needs to be able to detect the change condition used for executing the upper-tier functions and lower-tier functions described above, and may be a position detect sensor such as a global positioning system (GPS) capable of measuring the position of eyewear 100, a communication module that can be connected to a predetermined mobile device such as a smartphone with Bluetooth ("Bluetooth" is a registered trademark of Bluetooth SIG) and the like, an image pickup device such as a camera for identifying and sensing natural light and fluorescent light, an acceleration sensor, an angular velocity sensor, or a gyro sensor for sensing the moving state of eyewear 100 or states such as the posture of the user wearing eyewear 100, and the like.

Also in this embodiment, the first instruction operation and the second instruction operation described above do not necessarily need to be the instruction operations from the user wearing eyewear 100, and may be instruction operations from a non-wearer close to eyewear 100.

### [Other Embodiments]

Note that the abovementioned embodiments each are an example of the present invention. It is needless to say that the present invention is not limited to the abovementioned embodiments and other various embodiments are also possible within the scope of the concept of the present invention.

For example, in Embodiment 1 and Embodiment 2 described above, eyewear 100 includes single input section 140 capable of receiving a plurality of instruction operations, but the input sections may be disposed in a plurality of places in the frame. At this time, the control section may execute functions that are all in the same tier in accordance with the same instruction operation received by the plurality of input sections disposed in the plurality of places described above, or may execute functions in tiers different for each input section in accordance with the received instruction operation.

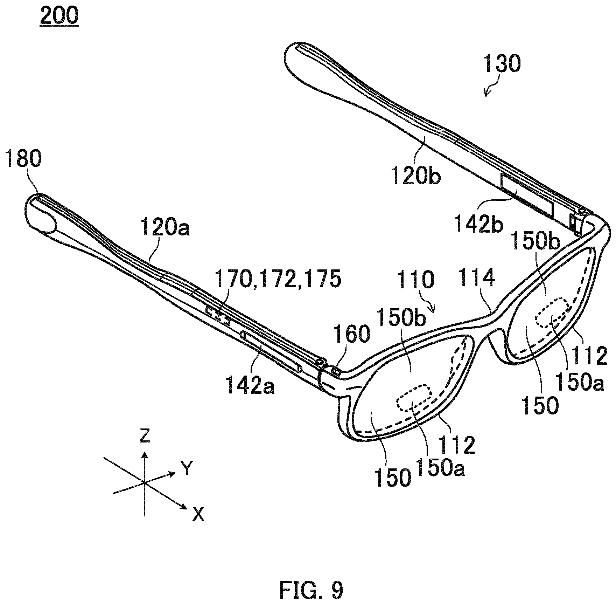

For example, in eyewear 200 illustrated in FIG. 9, two input sections 142a and 142b are respectively disposed in pair of temples 120a and 120b. At this time, the input operation of swiping along a plurality of touch sensors forming input section 142a disposed on temple 120a on the right side may be the first instruction operation in Embodiment 1 and Embodiment 2 described above regardless of the direction of the movement. At this time, the input operation of swiping along a plurality of touch sensors forming input section 142b disposed on temple 120b on the left side can be the second instruction operation in Embodiment 1 and Embodiment 2 described above regardless of the direction of the movement.

In eyewear 200 illustrated in FIG. 9, the input operation of swiping from the front side to the rear side along the plurality of touch sensors forming either of input sections 142a and 142b may be the first instruction operation in Embodiment 1 and Embodiment 2 described above regardless of whether the input operation is for input section 142a or input section 142b. At this time, the input operation of swiping from the rear side to the front side along the plurality of touch sensors forming either of input sections 142a and 142b can be the second instruction operation in Embodiment 1 and Embodiment 2 described above regardless of whether the input operation is for input section 142a or input section 142b.

In eyewear 200 illustrated in FIG. 9, the control section may execute the middle-tier function (the automatic function and the manual function) corresponding to the eyesight correction function that is the upper-tier function in Embodiment 2 in accordance with the input operation of swiping from the front side to the rear side along the plurality of touch sensors forming input section 142a disposed in temple 120a on the right side. At this time, the control section can execute the middle-tier function (the automatic function and the manual function) corresponding to the eyesight correction dimming function that is the upper-tier function in Embodiment 2 in accordance with the input operation of swiping from the front side to the rear side along the plurality of touch sensors forming input section 142b disposed in temple 120b on the left side.

At this time, the control section can cause the inclination angle (the lower-tier function in Embodiment 1) at which the refractive index is changed in the eyesight correction function and the automatic function to transition and be performed in accordance with the input operation of swiping input section 142a disposed in temple 120a on the right side from the rear side to the front side, and cause the value of the transmittance with respect to the inclination angle or the illuminance (the lower-tier function in Embodiment 1) at which the refractive index is changed in the eyesight correction dimming function and the automatic function to transition and be performed in accordance with the input operation of swiping input section 142b disposed in temple 120b on the left side from the rear side to the front side.

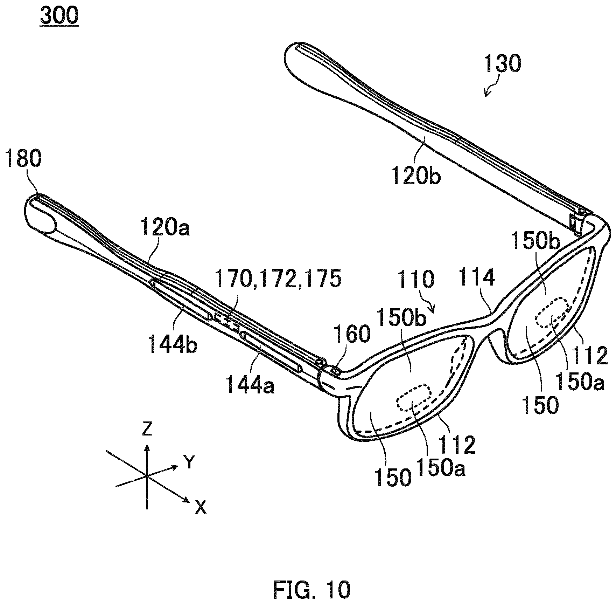

In eyewear 300 illustrated in FIG. 10, two input sections 144a and 144b are disposed in one temple (temple 120a on the right side) out of a pair of temples. Also at this time, as with eyewear 200 illustrated in FIG. 9, the input operation of swiping along a plurality of touch sensors forming one input section 144a may be the first instruction operation, and the input operation of swiping along a plurality of touch sensors forming other input section 144b may be the second instruction operation. The input operation of swiping from the front side to the rear side along the plurality of touch sensors forming either of input sections 144a and 144b may be the first instruction operation, and the input operation of swiping from the rear side to the front side along the plurality of touch sensors forming either of input sections 144a and 144b may be the second instruction operation.

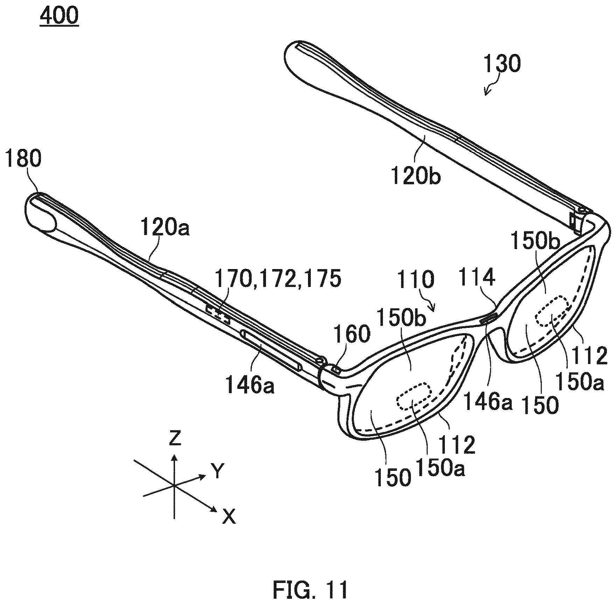

In eyewear 400 illustrated in FIG. 11, input sections 146a and 146b are respectively disposed in bridge 114 and temple 120a. At this time, the control section may selectively perform the upper-tier function in accordance with an input operation of pinching input section 146a disposed in bridge 114, and may execute the middle-tier function and the lower-tier function in accordance with the input operation of swiping from the front side to the rear side or from the rear side to the front side along input section 146b disposed in temple 120a.

The combination of the configuration of the input section and the instruction operation is not limited to the combination of the touch sensor and the movement (swiping) operation of a finger or thumb described above, and may be a combination of a pinch sensor having a vertical surface disposed in the bridge, the rim, the temple, and the like and an operation of pinching the pinch sensor, a combination of a camera and a movement of a finger or thumb or eyeballs, or the like.

The first instruction operation and the second instruction operation (and the third instruction operation, the fourth instruction operation, and the like) may be the same operation in which the number of times is changed (for example, the number of times of the tapping or the number of times of the swiping), a combination of different input operations and the number of times thereof, and the like as long as the instruction operations can be discriminated from each other.

Although not particularly shown, the frame may include a pair of nose pads that fixes the position of the eyewear by coming into contact with the nose of the user, hinge portions that connect the temples to the rims of the front in a rotatable manner, rim locking portions and end piece portions that are disposed on both ends of the rims and screw the electrically controlled lenses to the rims, tip portions having a shape for putting the temples on the ears, and the like. The input section, the control section, the sensing section, and the like may be disposed in any of those members.

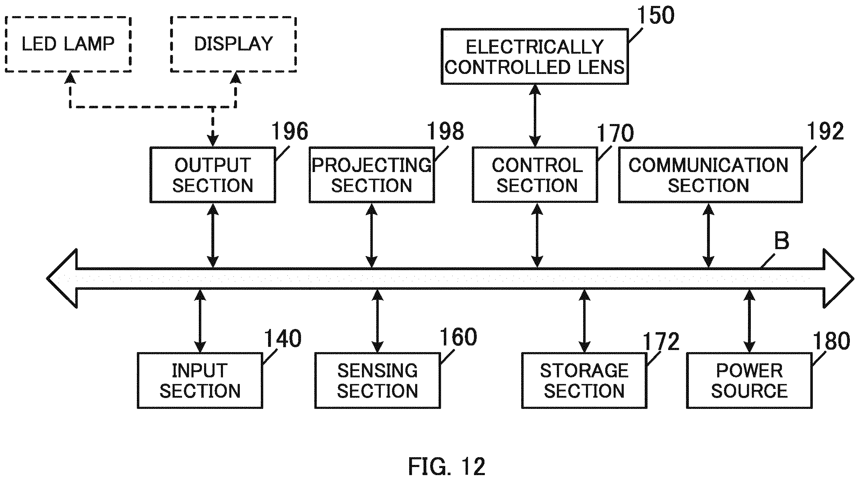

As illustrated in FIG. 12 that is a block diagram illustrating an exemplary functional configuration of the eyewear of the present invention, the eyewear may include communication section 192 capable of communicating with other devices, storage section 172 that stores therein a function (the middle-tier function, the lower-tier function, and the like) of a lower concept previously executed for each upper-tier function and enables the control section to execute the same function of the lower concept when a certain upper-tier function is executed next time, output section 196 that can be connected to an external notification apparatus that provides a notification indicating a change in the function such as an LED lamp or a displaying apparatus such as a display in a wired or wireless manner, and the like. The function sections included in the eyewear are connected by bus B.

At this time, for example, storage section 172 may store therein the change patterns of the transmittance and the refractive index selectively executed by control section 170 in response to the second instruction operation during the execution of the eyesight correction function or the dimming function that are the upper-tier functions in Embodiment 1. At this time, control section 170 can set change patterns that are not changed in response to the second instruction operation during the execution of the hybrid function that is the upper-tier function out of the change patterns of the transmittance and the refractive index described above to be change patterns that are stored during the execution of the eyesight correction function or the dimming function.

Note that, in the abovementioned description, description is made by giving the electrically controlled lens as an example of an optical module of which optical property changes in accordance with electric control, but the abovementioned optical module may be a transparent plate and the like capable of projecting an image, a video, and the like by projecting section 198. At this time, control section 170 may execute functions relating to the types of the projected image, video, or the like, functions relating to the patterns thereof, and the like with the first instruction operation and the second instruction operation.

The contents disclosed in the specification, accompanying drawings, and abstract included in the Japanese application of Japanese Patent Application No. 2017-031280 filed on February 22, 2017 are incorporated herein by reference in its entirety.

### Industrial Applicability

The eyewear of the present invention can execute a larger number of functions with a simpler operation. Therefore, the eyewear of the present invention is expected to contribute to the spread and development of the eyewear in the present field.

### Reference Signs List

100, 200, 300, 400 Eyewear
110 Front
112 Rim
114 Bridge
120a, 120b Temple
130 Frame
140, 142a, 142b, 144a, 144b, 146a, 146b Input section
140a, 140b Convex portion
150 Electrically controlled lens
150a First region
150b Second region
160 Sensing section
170 Control section
172 Storage section
175 CPU unit
180 Power source
192 Communication section
194 Storage section
196 Output section
198 Projecting section
1410 First region
1420 Second region
1430 Third region
1410a, 1420a, 1430a Touch sensor
1510 First transparent substrate
1520 First transparent electrode
1530 Refractive index changeable layer
1535 Adhesive layer
1540 Second transparent electrode
1550 Second transparent substrate
1560 Third transparent electrode
1570 Transmittance changeable layer
1580 Fourth transparent electrode
1590 Third transparent substrate

## Claims

1. An eyewear (100, 200, 300, 400), comprising:
a frame (130);
a single input section (140, 146a) to be disposed in the frame (130), the single input section (140, 146a) being configured to receive a first instruction operation and a second instruction operation that are different from each other; and
an optical module (150) to be held by the frame (130), the optical module (150) being a module whose optical property changes in accordance with electric control; **characterized in that**
the optical property includes a refractive index and a transmittance, and
the eyewear further comprises:
a control section (170) that changes the optical property of the optical module (150) by selectively executing an upper-tier function when the single input section (140, 146a) receives the first instruction operation and selectively executing a lower-tier function when the single input section (140, 146a) receives the second instruction operation,
wherein the upper-tier function and the lower-tier function are configured to be a hierarchical structure.

2. The eyewear (100, 200, 300, 400) according to claim 1, wherein the single input section (140, 146a) comprises a plurality of touch sensors (1410a, 1420a, 1430a) arranged in a row, and identifies a direction of the first instruction operation and the second instruction operation.

3. The eyewear (100, 200, 300, 400) according to claim 1 or 2, wherein the control section (170) selectively executes one of a plurality of the upper-tier functions that has transitioned in a previously determined order, in response to the first instruction operation.

4. The eyewear (100, 200, 300, 400) according to claim 1 or 2, wherein:
the single input section (140, 146a) is a sensor capable of identifying an operation amount of the instruction operations; and
the control section (170) selectively executes one of a plurality of the upper-tier functions that is determined in advance in association with the operation amount of the first instruction operation, in response to the first instruction operation.

5. The eyewear (100, 200, 300, 400) according to any one of claims 1 to 4, wherein the control section (170) selectively executes one of a plurality of the lower-tier functions that has transitioned in a previously determined order, in response to the second instruction operation.

6. The eyewear (100, 200, 300, 400) according to any one of claims 1 to 4, wherein:
the single input section (140, 146a) is capable of identifying the operation amount of the instruction operations, and
the control section (170) selectively executes one of a plurality of the lower-tier functions that is determined in advance in association with the operation amount of the second instruction operation, in response to the second instruction operation.

7. The eyewear (100, 200, 300, 400) according to any one of claims 1 to 6, wherein the control section (170) selectively executes one of a plurality of the upper-tier functions for changing different optical properties of the optical module (150), in response to the first instruction operation.

8. The eyewear (100, 200, 300, 400) according to claim 7, wherein the control section (170) selectively executes one of a plurality of upper-tier functions comprising an eyesight correction function that changes the refractive index of the optical module (150) and a dimming function that changes the transmittance of the optical module (150), in response to the first instruction operation.

9. The eyewear (100, 200, 300, 400) according to claim 7 or 8, wherein the control section (170) selectively executes one of a plurality of the lower-tier functions in response to the second instruction operation, the plurality of lower-tier functions having different change patterns for changing the optical property of the optical module (150).

10. The eyewear (100, 200, 300, 400) according to claim 9, wherein the control section (170) selectively executes one of a plurality of the lower-tier functions in response to the second instruction operation, the plurality of lower-tier functions having different change patterns for changing the refractive index or the transmittance of the optical module (170).

11. The eyewear (100, 200, 300, 400) according to any one of claims 1 to 10, wherein:
the single input section (140, 146a) receives an instruction operation to a first direction as the first instruction operation, and receives an instruction operation to a second direction as the second instruction operation; and
the first direction and the second direction are directions that are substantially opposite from each other.

12. The eyewear (100, 200, 300, 400) according to claim 11, wherein:
the single input section (140, 146a) is a touch sensor (1410a, 1420a, 1430a) disposed in a temple (120a, 120b) of the frame (130); and
the first direction and the second direction are substantially parallel to each other in a longitudinal axis direction of the temple (120a, 120b).

13. The eyewear (100, 200, 300, 400) according to any one of claims 1 to 12, wherein the single input section (140, 146a) comprises a plurality of touch sensors (1410a, 1420a, 1430a) disposed in a temple (120a, 120b) or a front (110) of the frame (130).

## Patentansprüche

1. Brille (100, 200, 300, 400), umfassend:
einen Rahmen (130);
einen einzelnen Eingabeabschnitt (140, 146a), der in dem Rahmen (130) anzuordnen ist, wobei der einzelne Eingabeabschnitt (140, 146a) so konfiguriert ist, dass er eine erste Befehlsoperation und eine zweite Befehlsoperation empfängt, die voneinander verschieden sind; und
ein optisches Modul (150), das von dem Rahmen (130) gehalten wird, wobei das optische Modul (150) ein Modul ist, dessen optische Eigenschaft sich in Abhängigkeit von einer elektrischen Steuerung ändert; **dadurch gekennzeichnet, dass**
die optische Eigenschaft einen Brechungsindex und einen Transmissionsgrad umfasst, und
wobei die Brille ferner umfasst:
einen Steuerabschnitt (170), der die optische Eigenschaft des optischen Moduls (150) ändert, indem er selektiv eine Funktion der oberen Ebene ausführt, wenn der einzelne Eingabeabschnitt (140, 146a) die erste Befehlsoperation empfängt, und selektiv eine Funktion der unteren Ebene ausführt, wenn der einzelne Eingabeabschnitt (140, 146a) die zweite Befehlsoperation empfängt,
wobei die Funktion der oberen Ebene und die Funktion der unteren Ebene so konfiguriert sind, dass sie eine hierarchische Struktur bilden.

2. Brille (100, 200, 300, 400) nach Anspruch 1, wobei der einzelne Eingabeabschnitt (140, 146a) eine Vielzahl von Berührungssensoren (1410a, 1420a, 1430a) umfasst, die in einer Reihe angeordnet sind, und eine Richtung der ersten Befehlsoperation und der zweiten Befehlsoperation identifiziert.

3. Brille (100, 200, 300, 400) nach Anspruch 1 oder 2, wobei der Steuerabschnitt (170) als Reaktion auf den ersten Befehlsvorgang selektiv eine von mehreren Funktionen der oberen Ebene ausführt, die in einer zuvor festgelegten Reihenfolge übergegangen sind.

4. Brille (100, 200, 300, 400) nach Anspruch 1 oder 2, wobei:
der einzelne Eingabeabschnitt (140, 146a) ein Sensor ist, der in der Lage ist, eine Operationsmenge der Befehlsoperationen zu identifizieren; und
der Steuerabschnitt (170) in Reaktion auf die erste Befehlsoperation selektiv eine von mehreren Funktionen der oberen Ebene ausführt, die im Voraus in Verbindung mit dem Operationsbetrag der ersten Befehlsoperation bestimmt wird.

5. Brille (100, 200, 300, 400) nach einem der Ansprüche 1 bis 4, wobei der Steuerabschnitt (170) als Reaktion auf den zweiten Befehlsvorgang selektiv eine von mehreren Funktionen der unteren Ebene ausführt, die in einer zuvor festgelegten Reihenfolge übergegangen ist.

6. Brille (100, 200, 300, 400) nach einem der Ansprüche 1 bis 4, wobei:
der einzelne Eingabeabschnitt (140, 146a) in der Lage ist, die Operationsmenge der Befehlsoperationen zu identifizieren, und
der Steuerabschnitt (170) in Reaktion auf die zweite Befehlsoperation selektiv eine von mehreren Funktionen der unteren Ebene ausführt, die im Voraus in Verbindung mit dem Operationsbetrag der zweiten Befehlsoperation bestimmt wird.

7. Brille (100, 200, 300, 400) nach einem der Ansprüche 1 bis 6, wobei der Steuerabschnitt (170) als Reaktion auf den ersten Befehlsvorgang selektiv eine von mehreren Funktionen der oberen Ebene zur Änderung verschiedener optischer Eigenschaften des optischen Moduls (150) ausführt.

8. Brille (100, 200, 300, 400) nach Anspruch 7, wobei der Steuerabschnitt (170) als Reaktion auf den ersten Befehlsvorgang selektiv eine von mehreren Funktionen der oberen Ebene ausführt, die eine Sehkorrekturfunktion, die den Brechungsindex des optischen Moduls (150) ändert, und eine Abblendfunktion, die den Transmissionsgrad des optischen Moduls (150) ändert, umfassen.

9. Brille (100, 200, 300, 400) nach Anspruch 7 oder 8, wobei der Steuerabschnitt (170) als Reaktion auf die zweite Befehlsoperation selektiv eine von mehreren Funktionen der unteren Ebene ausführt, wobei die mehreren Funktionen der unteren Ebene unterschiedliche Änderungsmuster zum Ändern der optischen Eigenschaft des optischen Moduls (150) aufweisen.

10. Brille (100, 200, 300, 400) nach Anspruch 9, wobei der Steuerabschnitt (170) selektiv eine von mehreren Funktionen der unteren Ebene als Reaktion auf die zweite Befehlsoperation ausführt, wobei die mehreren Funktionen der unteren Ebene unterschiedliche Änderungsmuster zum Ändern des Brechungsindex oder des Transmissionsgrades des optischen Moduls (170) aufweisen.

11. Brille (100, 200, 300, 400) nach einem der Ansprüche 1 bis 10, wobei:
der einzelne Eingabeabschnitt (140, 146a) eine Befehlsoperation in eine erste Richtung als die erste Befehlsoperation empfängt und eine Befehlsoperation in eine zweite Richtung als die zweite Befehlsoperation empfängt; und
die erste Richtung und die zweite Richtung Richtungen sind, die im Wesentlichen entgegengesetzt zueinander sind.

12. Brille (100, 200, 300, 400) nach Anspruch 11, wobei:
der einzelne Eingabeabschnitt (140, 146a) ein Berührungssensor (1410a, 1420a, 1430a) ist, der in einem Bügel (120a, 120b) des Rahmens (130) angeordnet ist; und
die erste Richtung und die zweite Richtung in einer Längsachsenrichtung des Bügels (120a, 120b) im Wesentlichen parallel zueinander sind.

13. Brille (100, 200, 300, 400) nach einem der Ansprüche 1 bis 12, wobei der einzelne Eingabeabschnitt (140, 146a) eine Vielzahl von Berührungssensoren (1410a, 1420a, 1430a) umfasst, die in einem Bügel (120a, 120b) oder einer Vorderseite (110) des Rahmens (130) angeordnet sind.

## Revendications

1. Lunettes (100, 200, 300, 400) comprenant:
un cadre (130);
une section d'entrée unique (140, 146a) à disposer dans le cadre (130), la section d'entrée unique (140, 146a) étant configurée pour recevoir une première opération d'instruction et une deuxième opération d'instruction qui sont différentes l'une de l'autre; et
un module optique (150) destiné à être maintenu par le cadre (130), le module optique (150) étant un module dont la propriété optique change en fonction de la commande électrique; **caractérisé en ce que**
la propriété optique comprend un indice de réfraction et une transmittance, et
les lunettes comprenant en outre
une section de commande (170) qui modifie la propriété optique du module optique (150) en exécutant sélectivement une fonction de niveau supérieur lorsque la section d'entrée unique (140, 146a) reçoit la première opération d'instruction et en exécutant sélectivement une fonction de niveau inférieur lorsque la section d'entrée unique (140, 146a) reçoit la deuxième opération d'instruction,
la fonction de niveau supérieur et la fonction de niveau inférieur sont configurées pour former une structure hiérarchique.

2. Lunettes (100, 200, 300, 400) selon la revendication 1, dans lesquelles la section d'entrée unique (140, 146a) comprend une pluralité de capteurs tactiles (1410a, 1420a, 1430a) disposés en rangée, et identifie une direction de la première opération d'instruction et de la deuxième opération d'instruction.

3. Lunettes (100, 200, 300, 400) selon la revendication 1 ou 2, dans lesquelles la section de contrôle (170) exécute sélectivement l'une de plusieurs fonctions de niveau supérieur qui ont effectué une transition dans un ordre préalablement déterminé, en réponse à la première opération d'instruction.

4. Lunettes (100, 200, 300, 400) selon la revendication 1 ou 2, dans lesquelle:
la section d'entrée unique (140, 146a) est un capteur capable d'identifier un montant d'opération des opérations d'instruction; et
la section de commande (170) exécute sélectivement l'une des fonctions de niveau supérieur déterminées à l'avance en association avec la quantité d'opération de la première opération d'instruction, en réponse à la première opération d'instruction.

5. Lunettes (100, 200, 300, 400) selon l'une quelconque des revendications 1 à 4, dans lesquelles la section de contrôle (170) exécute sélectivement l'une des fonctions de niveau inférieur qui a été transférée dans un ordre préalablement déterminé, en réponse à la deuxième opération d'instruction.

6. Lunettes (100, 200, 300, 400) selon l'une quelconque des revendications 1 à 4, dans lesquelles:
la section d'entrée unique (140, 146a) est capable d'identifier le montant des opérations d'instruction, et
la section de commande (170) exécute sélectivement l'une des fonctions de niveau inférieur déterminées à l'avance en association avec la quantité d'opération de la deuxième opération d'instruction, en réponse à la deuxième opération d'instruction.

7. Lunettes (100, 200, 300, 400) selon l'une quelconque des revendications 1 à 6, dans lesquelles la section de commande (170) exécute sélectivement l'une de plusieurs fonctions de niveau supérieur pour modifier différentes propriétés optiques du module optique (150), en réponse à la première opération d'instruction.

8. Lunettes (100, 200, 300, 400) selon la revendication 7, dans lesquelles la section de contrôle (170) exécute sélectivement l'une des fonctions de niveau supérieur comprenant une fonction de correction de la vue qui modifie l'indice de réfraction du module optique (150) et une fonction de gradation qui modifie la transmittance du module optique (150), en réponse à la première opération d'instruction.

9. Lunettes (100, 200, 300, 400) selon la revendication 7 ou 8, dans lesquelles la section de contrôle (170) exécute sélectivement l'une des fonctions de niveau inférieur en réponse à la deuxième opération d'instruction, la pluralité de fonctions de niveau inférieur ayant différents modèles de changement pour modifier la propriété optique du module optique (150).

10. Lunettes (100, 200, 300, 400) selon la revendication 9, dans lesquelles la section de contrôle (170) exécute sélectivement l'une des fonctions de niveau inférieur en réponse à la deuxième opération d'instruction, la pluralité de fonctions de niveau inférieur ayant différents modèles de changement pour modifier l'indice de réfraction ou la transmittance du module optique (170) .

11. Lunettes (100, 200, 300, 400) selon l'une quelconque des revendications 1 à 10, dans lesquelles:
la section d'entrée unique (140, 146a) reçoit une opération d'instruction dans une première direction en tant que première opération d'instruction, et reçoit une opération d'instruction dans une deuxième direction en tant que deuxième opération d'instruction ; et
la première direction et la seconde direction sont des directions sensiblement opposées l'une à l'autre.

12. Lunettes (100, 200, 300, 400) selon la revendication 11, dans lesquelles:
la section d'entrée unique (140, 146a) est un capteur tactile (1410a, 1420a, 1430a) disposé dans un temple (120a, 120b) du cadre (130); et
la première direction et la seconde direction sont sensiblement parallèles l'une à l'autre dans la direction de l' axe longitudinal du temple (120a, 120b).

13. Lunettes (100, 200, 300, 400) selon l'une quelconque des revendications 1 à 12, dans lesquelles la section d'entrée unique (140, 146a) comprend une pluralité de capteurs tactiles (1410a, 1420a, 1430a) disposés sur une branche (120a, 120b) ou une face avant (110) de la monture (130).
